# EUROPEAN PATENT APPLICATION

(11) **EP 4 765 952 A1**
(43) Date of publication of application: **24.06.2026**
(21) Application number: 24861721.9
(22) Date of filing: 29.07.2024
(51) Int. Cl.: H04W 36/08

(54) **CELL HANDOVER METHOD AND COMMUNICATION APPARATUS**

(30) Priority: 05.09.2023 CN 202311149469
(71) Applicant: HUAWEI TECHNOLOGIES CO., LTD., Shenzhen 518129 (CN)
(72) Inventor: QIN, Cheng, Shenzhen, Guangdong 518129 (CN); YANG, Rui, Shenzhen, Guangdong 518129 (CN); WANG, Sihai, Shenzhen, Guangdong 518129 (CN)
(74) Representative: Körber, Martin Hans
(86) International application number: PCT/CN2024/108169
(87) International publication number: WO 2025/050876

(57) **Abstract**

This application provides a cell handover method and a communication apparatus, and relates to the communication field. In the method, a network device may configure, for a terminal, at least one cell sequence predicted by the network device and a deactivation trigger condition of the at least one cell sequence, where the cell sequence is a target cell to which the terminal is sequentially handed over in a future time period. The terminal may perform at least one cell handover in succession based on the configuration of the network device, and may no longer use the cell sequence when the deactivation trigger condition corresponding to the cell sequence is satisfied. According to the method, in a consecutive handover process, a network side no longer needs to perform measurement and reporting configuration for the terminal, and the terminal does not need to perform measurement reporting, thereby reducing a handover delay in addition to reducing signaling overheads. In addition, the terminal may no longer use the current cell sequence when determining, based on the deactivation trigger condition of the cell sequence, that the cell sequence is inapplicable, thereby avoiding a handover to an inappropriate cell.

## Description

This application claims priority to Chinese Patent Application No. 202311149469.7, filed with the China National Intellectual Property Administration on September 5, 2023 and entitled "CELL HANDOVER METHOD AND COMMUNICATION APPARATUS", which is incorporated herein by reference in its entirety.

### TECHNICAL FIELD

This application relates to the communication field, and specifically, to a cell handover method and a communication apparatus.

### BACKGROUND

In mobility management, cell handover is an important part. As artificial intelligence (artificial intelligence, AI) technologies are gradually integrated with communication technologies, use of AI in mobility management is expected to improve performance in cell handover. Currently, a main concept of AI-based mobility management is to predict signal quality of neighboring cells in a time period during which a handover is to be performed, or predict an optimal handover cell in the neighboring cells in the time period during which the handover is to be performed, by measuring current signal quality of the neighboring cells, for example, a reference signal received power (reference signal received power, RSRP). After the prediction is completed, a target cell for this handover may be determined based on an AI prediction result, and then after the new cell is entered, the foregoing procedure continues to be repeated to complete subsequent cell handovers. In the foregoing process, neighboring cell and handover trigger condition configurations, and the like need to be performed for each handover, causing high signaling overheads.

### SUMMARY

This application provides a cell handover method and a communication apparatus, to reduce signaling overheads in a cell handover process.

According to a first aspect, a cell handover method is provided. The method may be performed by a network device, may be performed by a component (for example, a processor, a chip, or a chip system) of the network device, or may be implemented by a logical module or software that can implement all or some functions of the network device.

The method includes: generating first configuration information; and sending the first configuration information. The first configuration information indicates at least one cell sequence and a deactivation trigger condition of the at least one cell sequence, the cell sequence includes at least one candidate target cell, the at least one candidate target cell is a target cell to which a terminal may be sequentially handed over in a first time period, and the cell sequence becomes invalid when the deactivation trigger condition corresponding to the cell sequence is satisfied.

It should be understood that the cell sequence may also include a current serving cell. The at least one cell sequence indicates a possible handover path of the terminal in the first time period, and one cell sequence indicates one possible handover path. It should be understood that the first time period is a future time period. At least one candidate target cell in one cell sequence may also be referred to as a candidate target cell for consecutive handovers in the first time period.

According to the cell handover method provided in this application, the network device may configure the cell sequence for consecutive handovers in the future time period for the terminal, and the terminal may perform consecutive handovers in the future time period based on the configuration of the network device. In a consecutive handover process, a network side no longer needs to perform measurement and reporting configuration for the terminal, and the terminal does not need to perform measurement reporting, thereby reducing a handover delay in addition to reducing signaling overheads. In addition, the deactivation trigger condition of the cell sequence for consecutive handovers is configured for the terminal, so that the terminal may no longer use the current cell sequence when determining, depending on an actual situation, that the cell sequence is inapplicable, thereby avoiding a handover to an inappropriate cell.

In a possible implementation, the at least one cell sequence is predicted based on an AI model. According to this solution, AI-based mobility management can be implemented.

In a possible implementation, the first configuration information further indicates a monitoring cell associated with the candidate target cell and a corresponding monitoring reporting condition, the monitoring cell is used to determine whether the corresponding candidate target cell is applicable, and the monitoring cell is different from the corresponding candidate target cell.

It should be understood that each hop may be associated with one or more monitoring cells, or all hops may be associated with one or more same monitoring cells. Each hop may be associated with a monitoring reporting condition, or all hops may be associated with a same monitoring reporting condition. A monitoring cell associated with each hop does not belong to a candidate target cell for the hop, and there may be one or more monitoring cells associated with each hop.

According to this solution, the monitoring cell that does not belong to the candidate target cell is configured. This is conducive for determining whether the cell sequence configured on the network side is appropriate. If the cell sequence is inappropriate, the cell sequence may be deactivated in time to avoid a subsequent handover to an inappropriate cell.

In a possible implementation, the method further includes: receiving first reporting information, where the first reporting information indicates that a monitoring result of the monitoring cell satisfies the monitoring reporting condition.

For example, the first reporting information may be reported by using radio resource control (radio resource control, RRC) RRC, a medium access control control element (medium access control control element, MAC-CE), or uplink control information (uplink control information, UCI).

For example, the first reporting information may be sent in the current serving cell, or may be sent after a handover to a new cell is performed. For example, after an RRC connection is established in the new cell, the first reporting information is sent along with a corresponding RRC reconfiguration message and the like, to indicate that a monitoring report needs to be sent. Then, the new cell requests, by using RRC signaling UEInformationRequest or the like, the terminal to perform reporting.

According to this solution, the terminal reports the first reporting information to the network device when the monitoring result of the monitoring cell satisfies the monitoring reporting condition, so that the network device can determine, based on the reporting of the terminal, whether the terminal continues to use the previously configured cell sequence or reconfigures a cell sequence, and the terminal performs a more appropriate cell handover.

In a possible implementation, the monitoring reporting condition is: Signal quality of the monitoring cell is greater than a first threshold, and signal quality of the candidate target cell corresponding to the monitoring cell is less than a second threshold, where the first threshold is greater than the second threshold.

In a possible implementation, the deactivation trigger condition is: The signal quality of all the candidate target cells is less than a third threshold or an average signal quality value of the candidate target cells is less than a fourth threshold.

In a possible implementation, the method further includes: receiving second reporting information, where the second reporting information indicates that the terminal satisfies the deactivation trigger condition.

According to this solution, the terminal notifies the network device that the terminal satisfies the deactivation trigger condition, so that the network device can determine, based on the reporting of the terminal, that the terminal no longer uses the previously configured cell sequence, and then can configure a conventional cell handover for the terminal. This avoids a handover to an inappropriate cell by the terminal.

In a possible implementation, the method further includes: sending first indication information or second configuration information, where the first indication information is used to deactivate the first configuration information, and the second configuration information is used to reconfigure a cell sequence.

According to this solution, when determining that the terminal does not need to continue to use the previously configured cell sequence, the network device may deactivate the cell sequence or reconfigure a cell sequence, so that the terminal performs a more appropriate cell handover.

In a possible implementation, the first configuration information further indicates one or more of the following: a handover trigger condition, a usage condition associated with the at least one cell sequence, an effective time of the first configuration information, or a measurement parameter needed to measure the candidate target cell, and the handover trigger condition is used to determine whether to perform a cell handover.

According to a second aspect, a cell handover method is provided. The method may be performed by a terminal, may be performed by a component (for example, a processor, a chip, or a chip system) of the terminal, or may be implemented by a logical module or software that can implement all or some functions of the terminal.

The method includes: receiving first configuration information; and performing a cell handover based on the first configuration information. The first configuration information indicates at least one cell sequence and a deactivation trigger condition of the at least one cell sequence, the cell sequence includes at least one candidate target cell, the at least one candidate target cell is a target cell to which the terminal may be sequentially handed over in a first time period, and the cell sequence becomes invalid when the deactivation trigger condition corresponding to the cell sequence is satisfied.

It should be understood that the cell sequence may also include a current serving cell. The at least one cell sequence indicates a possible handover path of the terminal in the first time period, and one cell sequence indicates one possible handover path. It should be understood that the first time period is a future time period. At least one candidate target cell in one cell sequence may also be referred to as a candidate target cell for consecutive handovers in the first time period.

According to the cell handover method provided in this application, the network device may configure the cell sequence for consecutive handovers in the future time period for the terminal, and the terminal may perform consecutive handovers in the future time period based on the configuration of the network device. In a consecutive handover process, a network side no longer needs to perform measurement and reporting configuration for the terminal, and the terminal does not need to perform measurement reporting, thereby reducing a handover delay in addition to reducing signaling overheads. In addition, the deactivation trigger condition of the cell sequence for consecutive handovers is configured for the terminal, so that the terminal may no longer use the current cell sequence when determining, depending on an actual situation, that the cell sequence is inapplicable, thereby avoiding a handover to an inappropriate cell.

In a possible implementation, the first configuration information further indicates a monitoring cell associated with the candidate target cell and a corresponding monitoring reporting condition, the monitoring cell is used to determine whether the corresponding candidate target cell is applicable, and the monitoring cell is different from the corresponding candidate target cell.

In a possible implementation, the method further includes: sending first reporting information when a monitoring result of the monitoring cell satisfies the monitoring reporting condition, where the first reporting information indicates that the monitoring result of the monitoring cell satisfies the monitoring reporting condition.

In a possible implementation, the monitoring reporting condition is: Signal quality of the monitoring cell is greater than a first threshold, and signal quality of the candidate target cell corresponding to the monitoring cell is less than a second threshold, where the first threshold is greater than the second threshold.

In a possible implementation, the deactivation trigger condition is: The signal quality of all the candidate target cells is less than a third threshold or an average signal quality value of the candidate target cells is less than a fourth threshold.

In a possible implementation, the method further includes: sending second reporting information when the deactivation trigger condition is satisfied, where the second reporting information indicates that the terminal satisfies the deactivation trigger condition.

In a possible implementation, the method further includes: receiving first indication information or second configuration information, where the first indication information is used to deactivate the first configuration information, and the second configuration information is used to reconfigure a cell sequence.

In a possible implementation, the first configuration information further indicates one or more of the following: a handover trigger condition, a usage condition associated with the at least one cell sequence, an effective time of the first configuration information, or a measurement parameter needed to measure the candidate target cell, and the handover trigger condition is used to determine whether to perform a cell handover.

For beneficial effects of the implementations of the second aspect, refer to the descriptions in the first aspect. Details are not described herein again.

According to a third aspect, a cell handover method is provided. The method may be performed by a network device, may be performed by a component (for example, a processor, a chip, or a chip system) of the network device, or may be implemented by a logical module or software that can implement all or some functions of the network device.

The method includes: sending first configuration information, where the first configuration information is determined based on cell handover prediction capability information of a terminal, the first configuration information includes a measurement object configuration, and the first configuration information is used by the terminal to predict a target cell to which the terminal may be sequentially handed over in a first time period; and receiving a prediction result, where the prediction result is determined based on the first configuration information, the prediction result indicates at least one first cell sequence, the first cell sequence includes at least one first candidate target cell, and the at least one first candidate target cell is a target cell that is predicted by the terminal and to which the terminal may be sequentially handed over in the first time period.

It should be understood that the cell sequence may also include a current serving cell. The at least one cell sequence indicates a possible handover path of the terminal in the first time period, and one cell sequence indicates one possible handover path. It should be understood that the first time period is a future time period. At least one candidate target cell in one cell sequence may also be referred to as a candidate target cell for consecutive handovers in the first time period.

According to the cell handover method provided in this application, a network side may perform related configuration for performing consecutive-handover prediction for the terminal based on the cell handover prediction capability information of the terminal, and the terminal may predict the cell sequence for handovers in the future time period based on the configuration of the network side. In this way, consecutive-handover prediction on a terminal side is implemented. Further, by reporting the prediction result to the network side, the terminal may assist the network side in performing a cell handover or determining the cell sequence for handovers that is more appropriate for the terminal, and performing cell handover related configuration.

In a possible implementation, the method further includes: sending second configuration information based on the prediction result, where the second configuration information indicates at least one second cell sequence, the second cell sequence includes at least one second candidate target cell, the at least one second candidate target cell is a target cell to which the terminal may be sequentially handed over in the first time period, and the second configuration information is determined based on the prediction result. The at least one second cell sequence may be the same as or partially different from the at least one first cell sequence.

According to this solution, the network side may configure the cell sequence for subsequent consecutive handovers for the terminal based on the prediction result of the terminal, so that consecutive handovers are performed on the terminal side.

In a possible implementation, the second configuration information may further include a handover trigger condition of a conditional handover or a measurement reporting condition of a conventional cell handover. For example, the second configuration information may include a handover trigger condition or a measurement reporting condition associated with each hop, or include only a handover trigger condition or a measurement reporting condition associated with a next hop.

In a possible implementation, before the sending the first configuration information, the method further includes: receiving the cell handover prediction capability information.

For example, the cell handover prediction capability information includes one or more of the following: a quantity of consecutive handovers capable of being predicted by the terminal, a cell parameter capable of being predicted by the terminal, validity duration capable of being predicted by the terminal, a quantity of cells needed for measurement by the terminal, a cell parameter needed for measurement by the terminal, duration needed for measurement by the terminal, or a reference signal configuration needed for measurement by the terminal.

Based on the cell handover prediction capability information, the network side may learn a prediction capability of the terminal and a parameter needed for prediction, so that an appropriate parameter can be configured for the terminal by using the first configuration information, to enable the terminal to perform prediction.

In a possible implementation, the receiving the prediction result includes: receiving auxiliary information, where the auxiliary information includes the prediction result. In other words, the terminal may report the prediction result by using the auxiliary information.

In a possible implementation, before the receiving the prediction result, the method further includes: sending indication information, where the indication information is used to trigger the terminal to report the prediction result.

According to this solution, when the network side needs the terminal to predict the cell sequence for consecutive handovers, the network side may send the indication information to the terminal, and the terminal performs cell sequence prediction or reports the prediction result only after receiving the indication information.

In a possible implementation, the first configuration information includes a reporting trigger condition, and the terminal reports the prediction result when the reporting trigger condition is satisfied.

In a possible implementation, the reporting trigger condition includes: Signal quality of a cell in a first cell list is higher than a first threshold, where the cell in the first cell list is a cell configured by the network device; signal quality of a cell in a second cell list is higher than a second threshold, where the cell in the second cell list is a cell that the terminal has accessed (that is, a historical handover); or a cell sequence in a third cell list is the same as a cell sequence in a fourth cell list, where a cell in the third cell list is a cell that the terminal has accessed, and a cell in the fourth cell list is a cell configured by the network device.

In a possible implementation, the method further includes: receiving first indication information, where the first indication information indicates that the terminal has no prediction result or cannot generate the prediction result.

According to this solution, the terminal notifies the network side that the terminal cannot obtain the prediction result, so that the network side can be prevented from waiting for the prediction result of the terminal. The network side may perform conventional cell handover configuration or conditional handover configuration for the terminal in time, so that the terminal side can perform a cell handover.

In a possible implementation, the prediction result further includes one or more of the following: information about a cell in the first cell sequence, a probability of correctly predicting a cell in the first cell sequence, a handover time point for each hop in the first cell sequence, or predicted validity duration of the first cell sequence.

According to a fourth aspect, a cell handover method is provided. The method may be performed by a terminal, may be performed by a component (for example, a processor, a chip, or a chip system) of the terminal, or may be implemented by a logical module or software that can implement all or some functions of the terminal.

The method includes: receiving first configuration information, where the first configuration information is determined based on cell handover prediction capability information of the terminal, and the first configuration information includes a measurement object configuration; determining at least one first cell sequence based on the first configuration information, where the first cell sequence includes at least one candidate target cell, and the at least one candidate target cell is a predicted target cell to which the terminal may be sequentially handed over in a first time period; and sending a prediction result, where the prediction result indicates the at least one first cell sequence.

It should be understood that the cell sequence may also include a current serving cell. The at least one cell sequence indicates a possible handover path of the terminal in the first time period, and one cell sequence indicates one possible handover path. It should be understood that the first time period is a future time period. At least one candidate target cell in one cell sequence may also be referred to as a candidate target cell for consecutive handovers in the first time period.

According to the cell handover method provided in this application, a network side may perform related configuration for performing consecutive-handover prediction for the terminal based on the cell handover prediction capability information of the terminal, and the terminal may predict the cell sequence for handovers in the future time period based on the configuration of the network side. In this way, consecutive-handover prediction on a terminal side is implemented. Further, by reporting the prediction result to the network side, the terminal may assist the network side in performing a cell handover or determining the cell sequence for handovers that is more appropriate for the terminal, and performing cell handover related configuration.

In a possible implementation, the at least one first cell sequence is predicted based on an AI model. This solution enables AI model prediction on the terminal side.

In a possible implementation, the method further includes: receiving second configuration information, where the second configuration information indicates at least one second cell sequence, the second cell sequence includes at least one second candidate target cell, the at least one candidate target cell is a target cell to which the terminal may be sequentially handed over in the first time period, and the second configuration information is determined based on the prediction result.

In a possible implementation, the second configuration information further includes a handover trigger condition, and the handover trigger condition is used to determine whether to perform a cell handover.

In a possible implementation, before the receiving the first configuration information, the method further includes: sending the cell handover prediction capability information.

In a possible implementation, the cell handover prediction capability information includes one or more of the following: a quantity of consecutive handovers capable of being predicted by the terminal, a cell parameter capable of being predicted by the terminal, validity duration capable of being predicted by the terminal, a quantity of cells needed for measurement by the terminal, a cell parameter needed for measurement by the terminal, duration needed for measurement by the terminal, or a reference signal configuration needed for measurement by the terminal.

In a possible implementation, a manner of sending the prediction result includes any one of the following: sending in a manner of reporting auxiliary information, sending based on indication information of a network device, or sending after a reporting trigger condition configured by a network device is satisfied.

In a possible implementation, the reporting trigger condition includes: Signal quality of a cell in a first cell list is higher than a first threshold, where the cell in the first cell list is a cell configured by the network device; signal quality of a cell in a second cell list is higher than a second threshold, where the second cell list is a cell that the terminal has accessed (that is, a historical handover); or a cell sequence in a third cell list is the same as a cell sequence in a fourth cell list, where the third cell list is a cell that the terminal has accessed, and a fourth cell is a cell configured by the network device.

In a possible implementation, when the network device indicates to send the prediction result and the terminal has not determined the prediction result, the method further includes: sending first indication information, where the first indication information indicates that the terminal has no prediction result or cannot generate the prediction result.

In a possible implementation, the prediction result further includes one or more of the following: information about a cell in the first cell sequence, a probability of correctly predicting a cell in the first cell sequence, a handover time point for each hop in the first cell sequence, or predicted validity duration of the first cell sequence.

For beneficial effects of the implementations of the fourth aspect, refer to the descriptions in the third aspect. Details are not described herein again.

According to a fifth aspect, a communication apparatus is provided, including a module or a unit configured to perform the method in any one of the first aspect or the possible implementations of the first aspect, or including a module or a unit configured to perform the method in any one of the third aspect or the possible implementations of the third aspect.

According to a sixth aspect, a communication apparatus is provided, including a module or a unit configured to perform the method in any one of the second aspect or the possible implementations of the second aspect, or including a module or a unit configured to perform the method in any one of the fourth aspect or the possible implementations of the fourth aspect.

According to a seventh aspect, a communication apparatus is provided, including a processor. The processor is coupled to a memory. The memory is configured to store a computer program or instructions. The processor is configured to execute the computer program or instructions stored in the memory, to implement the method in any one of the first aspect or the possible implementations of the first aspect, or implement the method in any one of the third aspect or the possible implementations of the third aspect.

In a possible implementation, the apparatus further includes the memory coupled to the processor.

In a possible implementation, there are one or more processors and/or one or more memories.

In a possible implementation, the memory may be integrated with the processor, or the memory and the processor are disposed separately.

In a possible implementation, the apparatus further includes a communication interface, and the processor is coupled to the communication interface.

In an implementation, the apparatus is a network device. For example, the communication interface may be a transceiver or an input/output interface.

In another implementation, the apparatus is a chip in a first communication apparatus. For example, the communication interface may be an input/output interface.

According to an eighth aspect, a communication apparatus is provided, including a processor. The processor is coupled to a memory. The memory is configured to store a computer program or instructions. The processor is configured to execute the computer program or instructions stored in the memory, to implement the method in any one of the second aspect or the possible implementations of the second aspect, or implement the method in any one of the fourth aspect or the possible implementations of the fourth aspect.

In a possible implementation, the apparatus further includes the memory coupled to the processor.

In a possible implementation, there are one or more processors and/or one or more memories.

In a possible implementation, the memory may be integrated with the processor, or the memory and the processor are disposed separately.

In a possible implementation, the apparatus further includes a communication interface, and the processor is coupled to the communication interface.

In an implementation, the apparatus is a terminal. For example, the communication interface may be a transceiver or an input/output interface.

In another implementation, the apparatus is a chip in a second communication apparatus. For example, the communication interface may be an input/output interface.

According to a ninth aspect, a processor is provided, including an input circuit, an output circuit, and a processing circuit. The processing circuit is configured to receive a signal through the input circuit and transmit a signal through the output circuit, so that the processor performs the method in any one of the foregoing aspects or the possible implementations of any aspect.

In a specific implementation process, the processor may be a chip, the input circuit may be an input pin, the output circuit may be an output pin, and the processing circuit may be a transistor, a gate circuit, a trigger, any other logic circuit, or the like. An input signal received by using the input circuit may be, for example, but not limited to, received and input by a receiver. A signal output by using the output circuit may be, for example, but not limited to, output to a transmitter and transmitted by the transmitter. The input circuit and the output circuit may be a same circuit, and the circuit serves as an input circuit and an output circuit at different moments. Specific implementations of the processor and the circuits are not limited in this application.

According to a tenth aspect, a communication system is provided, including at least one of the communication apparatus provided in the fifth aspect and the communication apparatus provided in the sixth aspect, or including at least one of the communication apparatus provided in the seventh aspect and the communication apparatus provided in the eighth aspect.

According to an eleventh aspect, a computer program product is provided. The computer program product includes a computer program (which may also be referred to as code or instructions). When the computer program runs, a computer is enabled to perform the method in any one of the foregoing aspects or the possible implementations of any aspect.

According to a twelfth aspect, a computer-readable storage medium is provided. The computer-readable storage medium stores a computer program (which may also be referred to as code or instructions). When the computer program runs on a computer, the computer is enabled to perform the method in any one of the foregoing aspects or the possible implementations of any aspect.

According to a thirteenth aspect, a chip is provided. The chip includes a processor, configured to invoke a computer program from a memory and run the computer program, so that a communication apparatus on which the chip is installed performs the method in any one of the foregoing aspects or the possible implementations of any aspect.

According to a fourteenth aspect, a communication apparatus is provided. The communication apparatus includes an interface and a processor. The interface is configured to send a signal and/or receive a signal, so that the processor performs the method in any one of the foregoing aspects or the possible implementations of any aspect.

### BRIEF DESCRIPTION OF DRAWINGS

FIG. 1 is a diagram of an architecture of a mobile communication system according to an embodiment of this application;
FIG. 2 is a diagram of AI-based mobility prediction according to an embodiment of this application;
FIG. 3 is a diagram of a scenario of performing a cell handover by applying a cell handover method according to this application;
FIG. 4 is a schematic flowchart of a cell handover method according to an embodiment of this application;
FIG. 5A is a diagram of a handover scenario according to an embodiment of this application;
FIG. 5B is a diagram of another handover scenario according to an embodiment of this application;
FIG. 5C is a diagram of still another handover scenario according to an embodiment of this application;
FIG. 6 is a schematic flowchart of a cell handover method according to an embodiment of this application;
FIG. 7 is a diagram of a handover scenario according to an embodiment of this application;
FIG. 8 is a schematic flowchart of a cell handover method according to an embodiment of this application;
FIG. 9 is a schematic flowchart of a cell handover method according to an embodiment of this application;
FIG. 10 is a schematic flowchart of a cell handover method according to an embodiment of this application;
FIG. 11 is a diagram of a format of a prediction result according to an embodiment of this application;
FIG. 12 is a schematic flowchart of a cell handover method according to an embodiment of this application;
FIG. 13 is a schematic flowchart of a cell handover method according to an embodiment of this application;
FIG. 14 is a block diagram of a communication apparatus according to an embodiment of this application;
FIG. 15 is a block diagram of another communication apparatus according to an embodiment of this application;
FIG. 16 is a diagram of a structure of a terminal according to an embodiment of this application; and
FIG. 17 is a diagram of a structure of a network device according to an embodiment of this application.

### DESCRIPTION OF EMBODIMENTS

The following describes technical solutions in embodiments of this application with reference to accompanying drawings in embodiments of this application.

In descriptions of this application, unless otherwise specified, "/" indicates an "or" relationship between associated objects. For example, A/B may represent A or B. In this application, "and/or" describes only an association relationship for describing associated objects, and represents that three relationships may exist. For example, A and/or B may represent the following three cases: Only A exists, both A and B exist, and only B exists. A and B each may be in a singular or plural form. In addition, in the descriptions of this application, unless otherwise specified, "a plurality of" means two or more. "At least one of the following items (pieces)" or a similar expression thereof means any combination of these items, including a singular item (piece) or any combination of plural items (pieces). For example, at least one item (piece) of a, b, or c may represent a, b, c, a-b, a-c, b-c, or a-b-c, where a, b, and c each may be in a singular or plural form. In addition, for ease of clear description of the technical solutions in embodiments of this application, terms such as "first" and "second" are used in embodiments of this application to distinguish between same items having a basically same function and effect or similar items. A person skilled in the art can understand that the terms such as "first" and "second" are not used to limit a quantity and an execution sequence, and that the terms such as "first" and "second" do not indicate a definite difference. "Correspondence" and "association" in this application may be replaced with each other, or both may be replaced with descriptions having a same or similar meaning.

It should be noted that a determining condition in this application, for example, "greater than/higher than", "less than/lower than", or the like, may be replaced with "greater than or equal to", "less than or equal to", or the like. For ease of description, only "greater than" and "less than" are used as an example for description.

Sequence numbers do not mean execution sequences in various method embodiments of this application. The execution sequences should be determined based on functions and internal logic, and should not be construed as any limitation on the implementation processes of embodiments of this application.

It can be understood that in this application, descriptions similar to "in a case in which...", "if...", "when...", "it is assumed that...", and the like are used interchangeably. In addition, these descriptions all mean that corresponding processing is performed in an objective situation, are not intended to limit time, do not require a determining action during implementation, and do not mean that there are other limitations.

It can be understood that in some scenarios, some optional features in embodiments of this application may be independently implemented without depending on other features, for example, a solution on which the optional features are currently based, to resolve a corresponding technical problem and achieve corresponding effects. Alternatively, in some scenarios, the optional features may be combined with other features depending on requirements. Correspondingly, apparatuses provided in embodiments of this application may also correspondingly implement these features or functions. Details are not described herein.

In this application, unless otherwise specified, for same or similar parts in embodiments, refer to each other. In embodiments of this application and implementations/methods/implementation methods in embodiments, unless otherwise specified or a logical conflict occurs, terms and/or descriptions are consistent and may be mutually referenced between different embodiments and between implementations/methods/implementation methods in embodiments. Technical features in different embodiments and implementations/methods/implementation methods in embodiments may be combined to form a new embodiment, implementation, method, or implementation method based on an internal logical relationship thereof. The following implementations of this application are not intended to limit the protection scope of this application.

The technical solutions in embodiments of this application can be applied to various communication systems, for example, a long term evolution (long term evolution, LTE) system, a 5th generation (5th Generation, 5G) mobile communication system, new radio (new radio, NR), and other mobile communication systems that may emerge in the future.

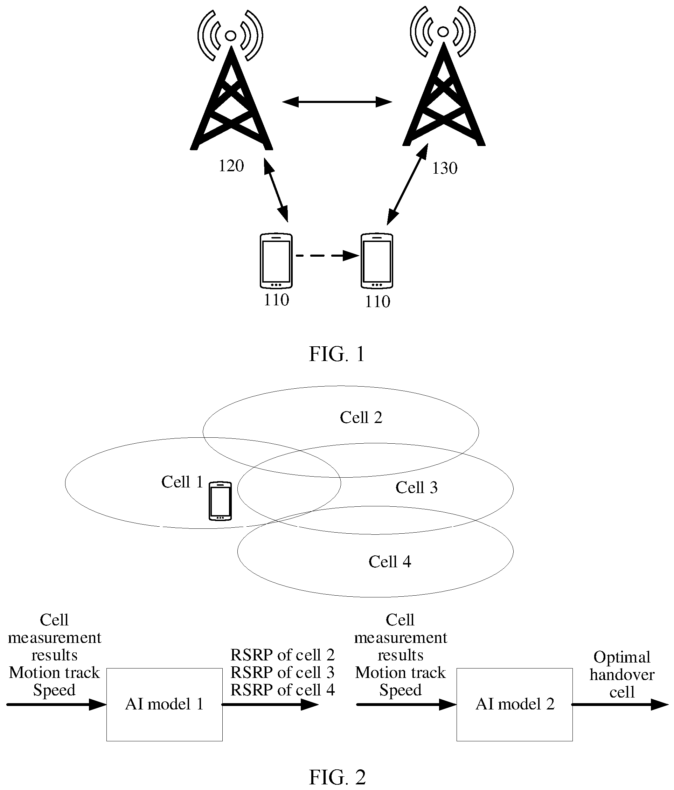

FIG. 1 is a diagram of an architecture of a mobile communication system according to this application. As shown in FIG. 1, the mobile communication system includes at least one terminal (for example, a terminal 110 shown in FIG. 1) and at least one network device (for example, a network device 120 and a network device 130 shown in FIG. 1). The terminal 110 may perform data communication with the network device 120 by using a wireless connection. When an area covered by the network device 130 satisfies a handover condition, the terminal 110 may be handed over from the network device 120 to the network device 130, to perform data communication with the network device 130 by using a wireless connection. It should be understood that the system shown in FIG. 1 may further include more terminals and network devices.

The terminal in this embodiment of this application, for example, the terminal 110, may also be referred to as user equipment (user equipment, UE), a mobile station (mobile station, MS), a mobile terminal (mobile terminal, MT), or the like, and is a device that provides voice and/or data connectivity for a user. For example, the terminal may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like.

Each of the network devices in this embodiment of this application, for example, the network device 120 and the network device 130, is a radio access network (radio access network, RAN) node (or device) that connects the terminal to a wireless network, and may also be referred to as a base station or an access network device. For example, the network device may be an evolved NodeB (evolved NodeB, eNodeB), a transmission reception point (transmission reception point, TRP), a next generation NodeB (next generation NodeB, gNB) in a 5G mobile communication system, a base station in a future mobile communication system or an access point (access point, AP) in a Wi-Fi system, a radio controller in a cloud radio access network (cloud radio access network, CRAN) scenario, a relay station, an access point, a vehicle-mounted device, a wearable device, a network device in another future evolved communication system, or the like.

In a possible scenario, a plurality of RAN nodes cooperatively assist the terminal in implementing wireless access, and different RAN nodes separately implement some functions of a base station. For example, the RAN node (namely, the network device in this application) may be a central unit (central unit, CU), a distributed unit (distributed unit, DU), a CU-control plane (control plane, CP), a CU-user plane (user plane, UP), a radio unit (radio unit, RU), or the like. The CU and the DU may be disposed separately, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU (or the CU-CP and the CU-UP), the DU, or the RU may have different names, but a person skilled in the art can understand their meanings. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module. It should be understood that a specific technology and a specific device form that are used by the network device are not limited in this application.

In this embodiment of this application, the terminal or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that process services by using a process (process), for example, a Linux operating system, a Unix operating system, an Android operating system, an iOS operating system, or a Windows operating system. The application layer includes applications such as a browser, an address book, word processing software, and instant messaging software. In addition, specific structures of execution bodies of methods provided in embodiments of this application are not specifically limited in embodiments of this application, provided that a program that records code for performing the methods provided in embodiments of this application can be run to perform communication according to the methods provided in embodiments of this application.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage device (for example, a hard disk, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive). Moreover, various storage media described in this specification may represent one or more devices and/or other machine-readable media that are configured to store information. The term "machine-readable media" may include but is not limited to a radio channel, and various other media that can store, contain, and/or carry instructions and/or data.

In mobility management, cell handover is an important part. A basic manner of a conventional NR/LTE cell handover is to perform determining based on a rule. A basic procedure is as follows: A terminal measures reference signals of a serving cell and a neighboring cell, and determines whether some mobility events configured by a network device are satisfied. If the mobility events are satisfied, corresponding time and corresponding measurement results that satisfy the mobility events are reported. The network device determines, based on the measurement results from the terminal, whether a cell handover needs to be performed. If a cell handover needs to be performed, the network device delivers a handover command to the terminal. The terminal completes the cell handover according to the handover command, and initiates random access to a new cell.

To further reduce a handover delay, a conditional handover (conditional handover, CHO) is introduced in release 16 (release 16, R16). The network device may configure a series of conditional handover and measurement configurations for the terminal based on the measurement results from the terminal. If the terminal satisfies a conditional handover requirement in a measurement process, the terminal may autonomously initiate random access to a target cell that satisfies the condition, no longer needs to report a notification of a satisfaction event and the measurement results to the network device, and does not need to wait for a handover command of a source cell.

As AI technologies are gradually integrated with communication technologies, there are many researches on a combination of AI and air interfaces at present. AI is used in the air interfaces. There are two scenarios based on a location of an AI model: dual-end AI and single-end AI. The dual-end AI means that an AI model needs to be used cooperatively on a network side and a terminal side. It can be considered that models on both sides belong to two parts of the overall AI model. The single-end AI means that an AI model is located on a network side or a terminal side, so that the single-end AI can be further divided into two sub-scenarios: network-side AI and terminal-side AI.

Mobility involves many procedures such as measurement and reporting, and involves decision-making, prediction of an optimal target cell, and other aspects. Therefore, use of AI in mobility management is expected to further improve performance in cell handover. Some AI-based mobility enhancement researches have emerged in existing researches. A main concept of these researches is to predict signal quality of neighboring cells in a time period during which a handover is to be performed, or predict an optimal handover cell in the neighboring cells in the time period during which the handover is to be performed, by measuring current signal quality of the neighboring cells, for example, a reference signal received power (reference signal received power, RSRP). After the prediction is completed, a target cell for this handover may be determined based on an AI prediction result, and then after the new cell is entered, the foregoing procedure continues to be repeated to complete subsequent cell handovers.

For example, FIG. 2 is a diagram of AI-based mobility prediction. A current serving cell of a terminal is cell 1, and neighboring cells are cell 2, cell 3, and cell 4. The terminal may further predict, based on an AI model 1 and current measurement results of cell 2, cell 3, and cell 4 and with reference to a motion track, a speed, and/or the like of the terminal, RSRPs of cell 2, cell 3, and cell 4 in a time period during which a handover is to be performed. A target cell for this handover may be determined based on a prediction result. For example, if the RSRP of cell 2 is the highest, cell 2 may be used as the target cell for this handover. Alternatively, the terminal may further predict, based on an AI model 2 and the current measurement results of cell 2, cell 3, and cell 4 and with reference to the motion track, the speed, and/or the like of the terminal, an optimal handover cell in the time period during which the handover is to be performed.

In the example shown in FIG. 2, after cell 1 starts to serve the terminal, a network device corresponding to cell 1 needs to configure information related to measurement and handover for the terminal, for example, configure frequencies of the neighboring cells, a handover trigger condition, and the like. After the terminal is handed over from cell 1 to another cell, for example, cell 2, a network device corresponding to cell 2 also needs to configure information related to measurement and handover for the terminal. Similarly, a corresponding network device needs to perform related configuration for the terminal for a subsequent handover. This solution in which related configuration needs to be performed for each handover causes high signaling overheads.

In view of this, this application provides a cell handover method. The method can resolve a problem of high signaling overheads in a handover process.

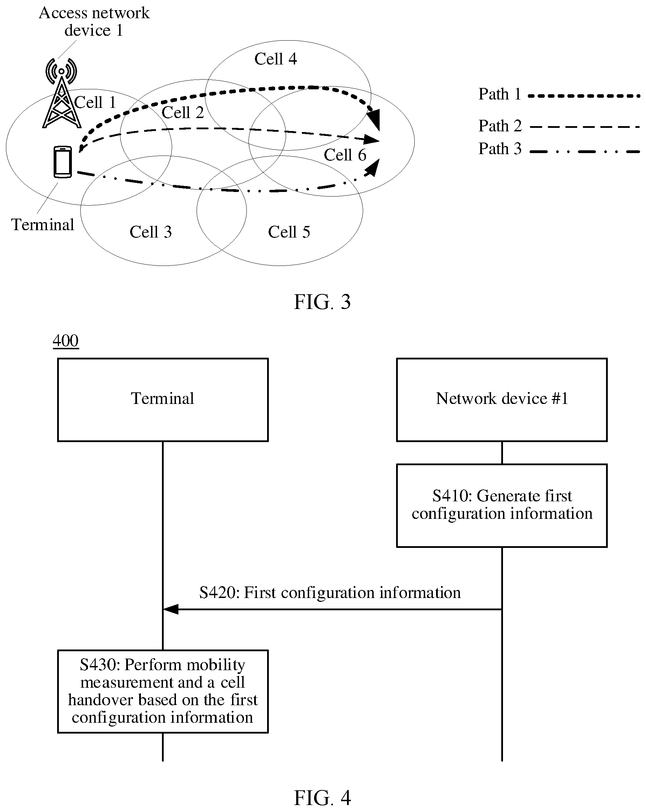

For example, FIG. 3 is a diagram of a scenario of performing a cell handover by applying a cell handover method according to this application. As shown in FIG. 3, cell 1 is a serving cell, and a network device 1 corresponding to cell 1 may predict a handover path of a terminal in a future time period based on historical related information of the terminal. For example, there are three possible handover paths: (1) path 1: cell 1→cell 2→cell 4→cell 6; (2) path 2: cell 1→cell 2→cell 6; and (3) path 3: cell 1→cell 3→cell 5→cell 6. Then, the network device 1 may configure the handover path for the terminal, and also perform measurement configuration and reporting configuration (for example, including a handover trigger condition) for the terminal. The terminal may perform a cell handover in a future time period based on the configuration of the network device 1.

For example, when cell 1 is a serving cell, based on information such as measurement results of cell 2 and cell 3 and the handover trigger condition, the terminal determines that cell 2 is a target cell for this handover, and then may be handed over to cell 2. When cell 2 is a serving cell, a network device corresponding to cell 2 does not need to perform measurement and reporting configuration for the terminal. The terminal measures cell 4 and cell 6 based on the configuration of the network device 1 received in cell 1, determines that cell 4 is a target cell for this handover, and then may be handed over to cell 4. Similarly, when cell 4 is a serving cell, a network device corresponding to cell 4 does not need to perform measurement and reporting configuration for the terminal. The terminal measures cell 6 based on the configuration of the network device 1 received in cell 1, determines that cell 6 is a target cell for this handover, and then may be handed over to cell 6.

In the example shown in FIG. 3, only the network device 1 needs to perform related configuration on the terminal, and a corresponding network device does not need to perform related configuration for the terminal each time after the terminal is handed over to a target cell. This can reduce signaling overheads in a handover process.

With reference to related accompanying drawings, the following describes in detail the methods provided in this application. It can be understood that, in flowcharts provided in this application, the methods are illustrated mainly by using examples in which a terminal and a network device (for example, a network device #1, a network device #2, or a network device #3) are used as execution bodies of the schematic interaction. However, the execution bodies of the schematic interaction are not limited in this application. For example, the terminal/network device in the flowcharts may be alternatively a chip, a chip system, or a processor that supports the terminal/network device in implementing the methods, or may be a logical module or software that can implement all or some functions of the terminal/network device.

FIG. 4 is a schematic flowchart of a cell handover method according to this application. The method may include S410 to S430. The following describes the steps in detail.

S410: A network device #1 generates first configuration information.

The network device #1 may first predict at least one cell sequence, and then generate the first configuration information. The first configuration information may indicate the at least one cell sequence. Any cell sequence may include at least one candidate target cell, or any cell sequence may include a current serving cell and the at least one candidate target cell. For example, in FIG. 3, the current serving cell is cell 1. The at least one candidate target cell is a target cell to which a terminal may be sequentially handed over in a first time period. It can be understood that the at least one cell sequence indicates a possible handover path of the terminal in the first time period, and one cell sequence indicates one possible handover path. It should be understood that the first time period is a future time period.

For example, in the diagram of the handover scenario shown in FIG. 3, the at least one cell sequence is (cell 2, cell 4, cell 6), (cell 2, cell 6), and (cell 3, cell 5, cell 6). Alternatively, the at least one cell sequence is (cell 1, cell 2, cell 4, cell 6), (cell 1, cell 2, cell 6), and (cell 1, cell 3, cell 5, cell 6).

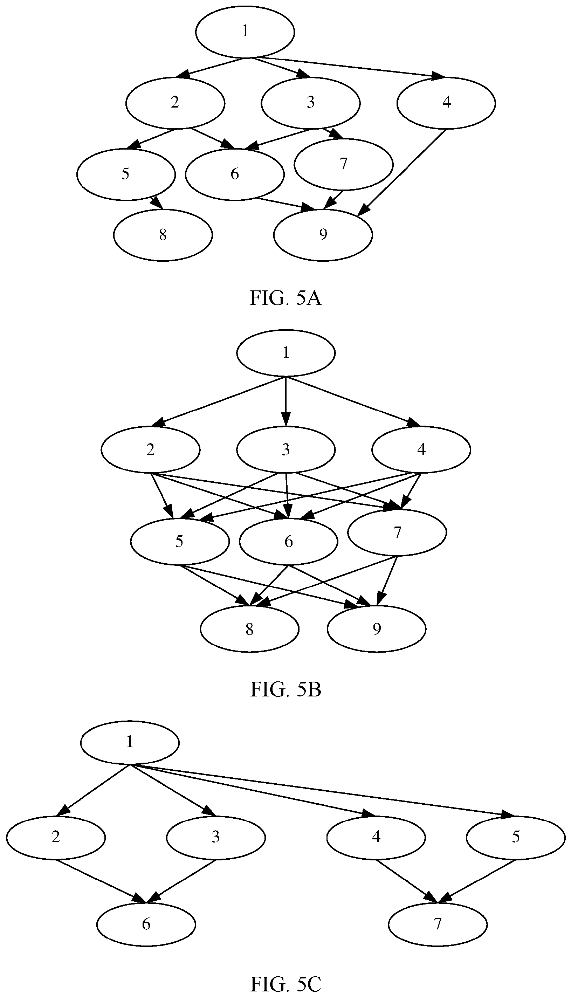

For example, FIG. 5A is a diagram of another handover scenario. As shown in FIG. 5A, a current serving cell of a terminal is cell 1, and possible handover paths of the terminal in a future time period include: (1) cell 1→cell 2→cell 5→cell 8, that is, the terminal may be handed over from cell 1 to cell 2, then handed over from cell 2 to cell 5, and finally handed over from cell 5 to cell 8; (2) cell 1→cell 2→cell 6, that is, the terminal may be handed over from cell 1 to cell 2, and then handed over from cell 2 to cell 6; (3) cell 1→cell 3→cell 6→cell 9, that is, the terminal may be handed over from cell 1 to cell 3, then handed over from cell 3 to cell 6, and finally handed over from cell 6 to cell 9; (4) cell 1→cell 3→cell 7→cell 9, that is, the terminal may be handed over from cell 1 to cell 3, then handed over from cell 3 to cell 7, and finally handed over from cell 7 to cell 9; and (5) cell 1→cell 4→cell 9, that is, the terminal may be handed over from cell 1 to cell 4, and then handed over from cell 4 to cell 9. In other words, in the scenario shown in FIG. 5A, the at least one cell sequence is (cell 2, cell 5, cell 8), (cell 2, cell 6), (cell 3, cell 6, cell 9), (cell 3, cell 7, cell 9), and (cell 4, cell 9). Alternatively, the at least one cell sequence is (cell 1, cell 2, cell 5, cell 8), (cell 1, cell 2, cell 6), (cell 1, cell 3, cell 6, cell 9), (cell 1, cell 3, cell 7, cell 9), and (cell 1, cell 4, cell 9).

For example, FIG. 5B is a diagram of still another handover scenario. As shown in FIG. 5B, a current serving cell of a terminal is cell 1, and a possible handover path of the terminal in a future time period is: cell 1→(cell 2, cell 3, cell 4)→(cell 5, cell 6, cell 7)→(cell 8, cell 9). In other words, the terminal may be handed over from cell 1 to one of cell 2, cell 3, and cell 4, handed over from any one of cell 2, cell 3, and cell 4 to one of cell 5, cell 6, and cell 7, and handed over from one of cell 5, cell 6, and cell 7 to one of cell 8 and cell 9. It is clear that in the scenario shown in FIG. 5B, the at least one cell sequence is (cell 2, cell 5, cell 8), (cell 2, cell 5, cell 9), (cell 2, cell 6, cell 8), (cell 2, cell 6, cell 9), (cell 2, cell 7, cell 8), (cell 2, cell 7, cell 9), (cell 3, cell 5, cell 8), (cell 3, cell 5, cell 9), (cell 3, cell 6, cell 8), (cell 3, cell 6, cell 9), (cell 3, cell 7, cell 8), (cell 3, cell 7, cell 9), (cell 4, cell 5, cell 8), (cell 4, cell 5, cell 9), (cell 4, cell 6, cell 8), (cell 4, cell 6, cell 9), (cell 4, cell 7, cell 8), and (cell 4, cell 7, cell 9).

In an implementation, that the first configuration information indicates the at least one cell sequence may be specifically: The first configuration information includes at least one cell list, one cell list indicates one cell sequence, and the cell list includes information about each cell in the cell sequence. For example, cell information may include one or more of the following: a cell identity, frequency information, frequency band information, tracking area information, or subcarrier spacing information. In other words, the cell list includes information about a target cell to which the terminal may be sequentially handed over in the first time period. Alternatively, the cell list includes information about the current serving cell of the terminal and information about a target cell to which the terminal may be sequentially handed over in the first time period.

For example, in the scenario shown in FIG. 3, the at least one cell list may be: {an identity of cell 2, an identity of cell 4, an identity of cell 6}, {the identity of cell 2, the identity of cell 6}, and {an identity of cell 3, an identity of cell 5, the identity of cell 6}. Alternatively, the at least one cell list may be: {an identity of cell 1, an identity of cell 2, an identity of cell 4, an identity of cell 6}, {the identity of cell 1, the identity of cell 2, the identity of cell 6}, and {the identity of cell 1, an identity of cell 3, an identity of cell 5, the identity of cell 6}. For example, the cell identity in this application may be a physical identifier or a logical identifier. An identifier type to be used is not specifically limited in this application, provided that cells in a specific range can be distinguished from each other.

In this application, at least one candidate target cell in one cell sequence may also be referred to as a candidate target cell for consecutive handovers in the first time period.

Consecutive handovers are at least one cell handover (hop) performed in succession. If a handover to the current serving cell is defined as a first hop, a handover from the current serving cell to a candidate target cell corresponding to the current serving cell is a second hop, and the candidate target cell corresponding to the current serving cell is a candidate target cell for the second hop. For example, in the scenario shown in FIG. 5A, if a first hop is defined as a cell handover to cell 1, a maximum value of N is 4, that is, consecutive handovers in FIG. 5A include a maximum of four hops. A second hop is cell 1→cell (2, 3, 4), a third hop is cell (2, 3, 4)→cell (5, 6, 7), and a fourth hop is cell (5, 6, 7)→cell (8, 9). Certainly, alternatively, a handover from the current serving cell to a candidate target cell of the current serving cell may be defined as a first hop. In this case, a quantity of cells included in one cell sequence indicates a quantity of handovers (hops) that may be performed in succession. The scenario shown in FIG. 5A is still used as an example. If cell 1→cell (2, 3, 4) is defined as a first hop, a maximum value of N is 3, that is, consecutive handovers in FIG. 5A include a maximum of three hops. A second hop is cell (2, 3, 4) to cell (5, 6, 7, 9), and a third hop is cell (5, 6, 7) to cell (8, 9). In this specification, a definition manner in which the handover from the current serving cell to the candidate target cell of the current serving cell is the first hop is mainly used as an example to describe some content by using examples.

Based on the foregoing understanding, in another implementation, that the first configuration information indicates at least one cell list may be specifically (A) or (B) as follows.

(A) The first configuration information includes at least one cell list, and one cell list includes information about a candidate target cell for one hop in consecutive handovers in the first time period.

In an example, an i^{th} cell list in the at least one cell list includes information about a candidate target cell for an i^{th} hop in the first time period, where i is a positive integer.

A usage condition of the cell list is not limited in this manner. For example, the at least one cell list can be used regardless of whether the terminal is in a high-speed motion status or a low-speed motion status. In addition, this manner is applicable to a scenario in which any candidate target cell for an X^{th} hop may be handed over to any candidate target cell for an (X+1)^{th} hop, where X is a positive integer. The scenario shown in FIG. 5B is used as an example. Any one of cell 2, cell 3, and cell 4 may be handed over to any one of cell 5, cell 6, and cell 7, and any one of cell 5, cell 6, and cell 7 may be handed over to any one of cell 8 and cell 9.

The scenario shown in FIG. 5B is used as an example for description. Assuming that the cell handover to the current serving cell is a first-hop handover, the at least one cell list may be four cell lists. A first cell list may include an identity or frequency information of cell 1; a second cell list may include identities or frequency information of cell 2, cell 3, and cell 4; a third cell list may include identities or frequency information of cell 5, cell 6, and cell 7; and a fourth cell list may include identities or frequency information of cell 8 and cell 9. Assuming that the cell handover from the current serving cell to the candidate target cell of the current serving cell is a first hop, the at least one cell list may be three cell lists. The three cell lists are the foregoing second to fourth cell lists.

It should be noted that if the cell handover from the current serving cell to the candidate target cell of the current serving cell is defined as the first hop, in a possible manner, the first configuration information includes the at least one cell list, a first cell list includes an identity or frequency information of the current serving cell, and an (i+1)^{th} cell list includes information about a candidate target cell for an i^{th} hop in consecutive handovers in the first time period, where i is a positive integer.

Similarly, if the cell handover to the current serving cell is defined as the first hop, in a possible manner, the first configuration information includes the at least one cell list, and an i^{th} cell list includes information about a candidate target cell for an (i+1)^{th} hop in consecutive handovers in the first time period, where i is a positive integer. In this manner, a first list in the at least one cell list may include an identity or frequency information of the candidate target cell of the current serving cell.

In another example, the at least one cell list is a plurality of groups of cell lists, an i^{th} cell list in each group of cell lists includes information about a candidate target cell for an i^{th} hop in the first time period, i is a positive integer, and each group of cell lists includes at least one cell list.

In this manner, usage conditions of the groups of cell lists may be different. For example, one group of cell lists is applicable to a high-speed motion status of the terminal, and one group of cell lists is applicable to a low-speed motion status of the terminal. For one group of cell lists, any candidate target cell for an X^{th} hop may be handed over to any candidate target cell for an (X+1)^{th} hop, where X is a positive integer.

For example, FIG. 5C is a diagram of a cell handover scenario. Handover paths shown in FIG. 5C are: cell 1→(cell 2, cell 3)→(cell 6) for high-speed motion, and cell 1→(cell 4, cell 5)→(cell 7) for low-speed motion. In this case, the first configuration information may include a group of cell lists (a cell list group #1) applicable to high-speed motion and a group of cell lists (a cell list group #2) applicable to low-speed motion. Assuming that the cell handover from the current serving cell to the candidate target cell of the current serving cell is the first hop, a first cell list in the cell list group #1 may include information about cell 2 and cell 3, and a second cell list in the cell list group #1 may include information about cell 6; and a first cell list in the cell list group #2 may include information about cell 4 and cell 5, and a second cell list in the cell list group #2 may include information about cell 7.

It should be noted that if the cell handover from the current serving cell to the candidate target cell of the current serving cell is defined as the first hop, in a possible manner, the first configuration information includes a plurality of groups of cell lists; and for one group of cell lists, a first cell list includes an identity or frequency information of the current serving cell, and an (i+1)^{th} cell list includes information about a candidate target cell for an i^{th} hop in consecutive handovers in the first time period, where i is a positive integer.

Similarly, if the cell handover to the current serving cell is defined as the first hop, in a possible manner, the first configuration information includes a plurality of groups of cell lists; and for one group of cell lists, an i^{th} cell list includes information about a candidate target cell for an (i+1)^{th} hop in consecutive handovers in the first time period, where i is a positive integer. In this manner, a first list in the at least one cell list may include an identity or frequency information of the candidate target cell of the current serving cell.

(B) The first configuration information includes at least one cell list, one cell list includes information about a candidate target cell for one hop in consecutive handovers in the first time period, and the first configuration information indicates an association relationship between cells in cell lists for two adjacent hops.

This manner further indicates the association relationship between cells in cell lists for two adjacent hops on the basis of (A).

In an example, in (B), an i^{th} cell list in the at least one cell list includes information about a candidate target cell for an i^{th} hop in the first time period, where i is a positive integer. In this case, the association relationship between cells in cell lists for two adjacent hops is an association relationship between cells in an i^{th} cell list and a j^{th} cell list, where i is a positive integer. Assuming that a quantity of the at least one cell list is M, j=i+1, and j≠N. In other words, for any cell in the i^{th} cell list, a handover may be performed from the cell to a cell or cells in the j^{th} cell list. This implementation is applicable to a scenario in which any candidate target cell for an X^{th} hop can be handed over to some candidate target cells for an (X+1)^{th} hop, or a scenario in which some candidate target cells for the X^{th} hop can be handed over to any candidate target cell for the (X+1)^{th} hop.

The scenario shown in FIG. 5A is used as an example. In some understanding, in the consecutive-handover scenario shown in FIG. 5A, a maximum of three-hop handovers can be performed, and each handover is one hop or each hop is one handover. A first hop is that the terminal is handed over from cell 1 to another cell, and candidate target cells for the first hop include cell 2, cell 3, and cell 4. In this case, a first cell list in the at least one cell list may include identities or frequency information of cell 2, cell 3, and cell 4. A second hop is that the terminal is handed over from one of cell 2, cell 3, and cell 4 to another cell, and candidate target cells for the second hop include cell 5, cell 6, cell 7. In this case, a second cell list in the at least one cell list may include identities or frequency information of cell 5, cell 6, cell 7. A third hop is that the terminal is handed over from one of cell 5, cell 6, cell 7 to another cell, and candidate target cells for the third hop include cell 8 and cell 9. In this case, a third cell list in the at least one cell list may include identities or frequency information of cell 8 and cell 9. In the second-hop handover, the terminal cannot be handed over from any one of cell 2, cell 3, and cell 4 to any one of cell 5, cell 6, cell 7, and in the third-hop handover, the terminal cannot be handed over from any one of cell 5, cell 6, cell 7 to any one of cell 8 and cell 9. Therefore, the first configuration information further needs to indicate an association relationship between candidate target cells for hops. For example, when cell 2 is associated with cell 5 and cell 6, that is, cell 2 serves as a source cell, candidate target cells can only be cell 5 and cell 6.

In an example, in (B), the at least one cell list is a plurality of groups of cell lists, an i^{th} cell list in each group of cell lists includes information about a candidate target cell for an i^{th} hop in the first time period, i is a positive integer, and each group of cell lists includes at least one cell list. In this case, the association relationship between cells in cell lists for two adjacent hops is an association relationship between cells in cell lists for two adjacent hops in a same group of cell lists. For the association relationship, refer to the first example in (B). Details are not described herein again.

It should be understood that a possible implementation of the first configuration information is not limited to (A) or (B) in this application, and the first configuration information may be alternatively implemented in an equivalent manner of (A) or (B).

In addition to indicating the at least one cell sequence, the first configuration information may further indicate a deactivation trigger condition of the at least one cell sequence. When a deactivation trigger condition corresponding to a cell sequence is satisfied, the cell sequence becomes invalid. In other words, a cell handover relationship included in consecutive handovers is no longer applicable, and the terminal may no longer use the cell sequence to perform consecutive handovers.

All cell sequences may be corresponding to a same deactivation trigger condition. Alternatively, each of the at least one cell sequence may be corresponding to one deactivation trigger condition. Alternatively, candidate target cells for each hop or handovers corresponding to each hop may be corresponding to a same deactivation trigger condition. Alternatively, candidate target cells for each hop or handovers corresponding to each hop may be corresponding to respective deactivation trigger conditions.

For example, the five cell sequences in the scenario shown in FIG. 5A may be corresponding to a same deactivation trigger condition. When the deactivation trigger condition is satisfied, all the five cell sequences become invalid, that is, the terminal no longer uses the five cell sequences to perform a cell handover. For another example, each of the five cell sequences in the scenario shown in FIG. 5A may be corresponding to one deactivation trigger condition. When a deactivation trigger condition corresponding to a cell sequence is satisfied, for example, when the cell sequence (cell 3, cell 7, and cell 9) satisfies a deactivation trigger condition corresponding to the cell sequence, the terminal no longer uses the cell sequence to perform a cell handover.

For example, the deactivation trigger condition may be any one of the following:
(1a) Signal quality of any one of candidate target cells for this hop is less than a first threshold.
(2a) Signal quality of a cell with highest signal quality among candidate target cells for this hop is less than a second threshold.
(3a) Average signal quality of candidate target cells for this hop is less than a third threshold.
(4a) Signal quality of each of candidate target cells for this hop is less than a preset threshold corresponding to the candidate target cell.

The foregoing (1a) means: It is considered that the deactivation trigger condition is satisfied, provided that signal quality of one of the candidate target cells for this hop is less than the first threshold.

It should be noted that each candidate cell in the at least one cell sequence may be corresponding to one first threshold or preset threshold, all candidate cells in the at least one cell sequence are corresponding to a same first threshold or preset threshold, or candidate target cells for each hop may be corresponding to one first threshold or preset threshold.

The signal quality described in this application may include one or more of the following: a reference signal received power (reference signal received power, RSRP), a signal-to-interference-plus-noise ratio (signal-to-interference-plus-noise ratio, SINR), or a reference signal received quality (reference signal received quality, RSRQ).

The signal quality may be alternatively represented by using other appropriate parameters in this application. In addition, the first threshold, the second threshold, the third threshold, and the preset threshold may be equal, or may not be equal. This is not limited in this application.

It should be noted that "the candidate target cells for this hop" in the deactivation trigger condition are candidate target cells for this hop specific to a cell, that is, candidate target cells when the cell serves as a source cell. Alternatively, "the candidate target cells for this hop" may be expressed as candidate target cells of a serving cell. For example, in the scenario shown in FIG. 5A, if the terminal is handed over from cell 1 to cell 2, for cell 2, the candidate target cells for the second hop are cell 5 and cell 6, and do not include cell 7. In the scenario shown in FIG. 5B, if the terminal is handed over from cell 1 to cell 2 in the first hop, for cell 2, candidate target cells for the second hop are cell 5, cell 6, and cell 7.

The scenario shown in FIG. 5A is used as an example. It is assumed that a deactivation trigger event corresponding to each hop is the foregoing (1a). The candidate target cells for the first hop include cell 2, cell 3, and cell 4. If signal quality of cell 2, cell 3, and cell 4 is all less than the first threshold, the terminal considers that the at least one cell sequence configured by the network device #1 is inappropriate, and therefore no longer uses the at least one cell sequence. If signal quality of cell 2, cell 3, and cell 4 is all greater than or equal to the first threshold, the terminal considers that the at least one cell sequence configured by the network device #1 is appropriate. Then, the terminal may continue to use the at least one cell sequence, and may be handed over to one of cell 2, cell 3, and cell 4. If the terminal is handed over from cell 1 to cell 2, the terminal may further determine whether signal quality of both cell 5 and cell 6 is less than the first threshold, and determine, based on a determining result, whether to continue to use the at least one cell sequence.

For example, the deactivation trigger condition may be alternatively any one of the following:
(1b) In cells associated with consecutive handovers from an X^{th} hop to a Y^{th} hop, a quantity of cells whose signal quality is less than a corresponding threshold is greater than a quantity threshold, or a proportion of cells whose signal quality is less than a corresponding threshold is greater than a proportion threshold.
(2b) A proportion of cells whose signal quality is lower than a corresponding threshold in candidate target cells of a serving cell is higher than a proportion threshold.
(3b) Signal quality of a serving cell is lower than a corresponding threshold.
(4b) In cells on which camping has been performed during consecutive handovers from an X^{th} hop to a Y^{th} hop, a proportion of cells whose signal quality is lower than a corresponding threshold is higher than a proportion threshold.

It should be understood that a signal quality threshold may be as follows: All cells are corresponding to a same threshold, each cell is corresponding to one threshold, or each hop is corresponding to one threshold. Similarly, a proportion threshold may be as follows: Each hop is corresponding to one proportion threshold or hops are corresponding to a same proportion threshold. The proportion thresholds in the foregoing items may be identical or different.

In (1b), X may be equal to 1 or may be an integer greater than 1, Y≥X, and Y may be a quantity of hops experienced plus 1. The signal quality threshold, the quantity threshold, and the proportion threshold may be configured by the network device.

The cells associated with consecutive handovers from the X^{th} hop to the Y^{th} hop may include: a source cell for the X^{th} hop and a candidate target cell for each hop from the X^{th} hop to the Y^{th} hop. For example, as shown in FIG. 5A, a source cell for the first hop is cell 1, and the candidate target cells for the first hop are cell 2, cell 3, and cell 4. Assuming that the terminal is handed over from cell 1 to cell 2, the candidate target cells for the second hop are cell 5 and cell 6. Assuming that the terminal is then handed over from cell 2 to cell 5, the candidate target cell for the third hop is cell 8.

It is assumed that the trigger condition is the foregoing (1b), and X=1. For example, as shown in FIG. 5A, when cell 1 is a serving cell, statistics collection may be performed on signal quality of cell 1, and the signal quality of cell 2, cell 3, and cell 4 measured by the terminal in cell 1. If a proportion of cells in cell 1, cell 2, cell 3, and cell 4 whose signal quality is lower than a corresponding threshold is greater than a proportion threshold, it is considered that the deactivation trigger condition is satisfied. For example, it is assumed that the proportion threshold is 1/3. If signal quality of at least two of cell 1, cell 2, cell 3, and cell 4 is lower than a corresponding threshold, it is considered that the deactivation trigger condition is satisfied; or if signal quality of only one cell is lower than a corresponding threshold or signal quality of all the four cells is not lower than a corresponding threshold, the deactivation trigger condition is not satisfied. If the deactivation trigger condition is not satisfied, the terminal may be handed over from cell 1 to one of cell 2, cell 3, and cell 4. Assuming that the terminal is handed over from cell 1 to cell 2, cell 2 is a serving cell in this case. When the terminal is in the serving cell 2, statistics collection may be performed on the signal quality of cell 1, the signal quality of cell 2, cell 3, and cell 4 measured by the terminal in cell 1, and signal quality of cell 5 and cell 6 measured by the terminal in cell 2. If a proportion of cells in the six cells whose signal quality is lower than a corresponding threshold is greater than a proportion threshold, it is considered that the deactivation trigger condition is satisfied. For example, it is still assumed that the proportion threshold is 1/3. If signal quality of one or two of cell 1, cell 2, cell 3, cell 4, cell 5, and cell 6 is lower than a corresponding threshold, it is considered that the deactivation trigger condition is not satisfied; otherwise, the deactivation trigger condition is satisfied.

It is assumed that the trigger condition is the foregoing (2b). For example, as shown in FIG. 5A, when cell 1 is a serving cell, if a proportion of cells in cell 2, cell 3, and cell 4 whose signal quality is lower than a corresponding threshold is higher than a proportion threshold, it is considered that the deactivation trigger condition is satisfied. For example, it is assumed that the proportion threshold is 1/2. If signal quality of at least two of cell 2, cell 3, and cell 4 is lower than a corresponding threshold, it is considered that the deactivation trigger condition is satisfied; and if signal quality of all of cell 2, cell 3, and cell 4 is not lower than a corresponding threshold, it is considered that the deactivation trigger condition is not satisfied. It is assumed that the deactivation trigger condition is not satisfied, the terminal is handed over from cell 1 to cell 2, and the proportion threshold is still 1/2. When cell 2 is a serving cell, if signal quality of one of cell 5 and cell 6 is lower than a corresponding threshold, it is considered that the deactivation trigger condition is not satisfied; otherwise, the deactivation trigger condition is satisfied.

It is assumed that the trigger condition is the foregoing (3b). For example, as shown in FIG. 5A, when cell 1 is a serving cell, if signal quality of the serving cell 1 is lower than a corresponding threshold, it is considered that the deactivation trigger condition is satisfied. If the deactivation trigger condition is not satisfied and the terminal is handed over from cell 1 to cell 2, when the signal quality of cell 2 is lower than a corresponding threshold, it is considered that the deactivation trigger condition is satisfied.

It is assumed that the trigger condition is the foregoing (4b), X=1, and a proportion threshold is 1/3. For example, as shown in FIG. 5A, when cell 1 is a serving cell, if signal quality of a cell is lower than a corresponding threshold, it is considered that the deactivation trigger condition is satisfied; otherwise, the deactivation trigger condition is not satisfied. If the deactivation trigger condition is not satisfied and the terminal is handed over from cell 1 to cell 2, when signal quality of at least one of cell 1 and cell 2 is lower than a corresponding threshold, it is considered that the deactivation trigger condition is satisfied; otherwise, the deactivation trigger condition is not satisfied. If the deactivation trigger condition is not satisfied and the terminal is handed over from cell 2 to cell 5, when signal quality of at least two of cell 1, cell 2, and cell 5 is lower than a corresponding threshold, it is considered that the deactivation trigger condition is satisfied; otherwise, the deactivation trigger condition is not satisfied.

In a possible implementation, when a cell sequence satisfies a deactivation trigger condition corresponding to the cell sequence, the terminal sends second reporting information to the network device, where the second reporting information indicates that the terminal satisfies the deactivation trigger condition.

Correspondingly, after receiving the second reporting information, the network device may perform conventional handover configuration or conditional handover configuration for the terminal. The terminal no longer uses the cell sequence to perform a cell handover, but uses a conventional handover or a conditional handover configured by the network device to perform a cell handover. This solution can avoid a problem that a handover to an inappropriate cell is caused because a cell sequence configured by the network device is still used when the sequence is inappropriate.

It should be understood that the network device herein may be the network device #1, or may not be the network device #1. For example, the network device may be a network device #3 in the following method 600.

In addition to indicating the at least one cell sequence and the deactivation trigger condition corresponding to the at least one cell sequence, the first configuration information may further indicate a measurement parameter needed to measure the candidate target cell and a handover trigger condition.

The measurement parameter needed to measure the candidate target cell may include related information of a reference signal of the candidate target cell. For example, the related information of the reference signal may include a synchronization signal block (synchronization signal block, SSB) period of the candidate target cell, an SSB offset, a location of a bandwidth part BWP (bandwidth part, BWP) containing an SSB, a channel state information-reference signal (channel state information-reference signal, CSI-RS) period, a CSI-RS time-frequency domain position, and the like. It should be understood that, for specific measurement parameters needed to measure a cell, refer to the conventional technology. Details are not described herein.

The handover trigger condition may also be referred to as a reporting configuration or included in the reporting configuration. When the handover trigger condition is satisfied, the terminal may perform a cell handover. In this application, handover trigger conditions corresponding to each hop (that is, handovers corresponding to each hop) may be identical or different.

For example, the handover trigger condition may be a trigger event of a conditional handover in the conventional technology. The trigger event of the conditional handover may be an event A3 (condEventA3), an event A4 (condEventA4), or an event A5 (condEventA5). The event A3 indicates that signal quality of a target cell is higher than that of a serving cell by a specific value. The event A4 indicates that signal quality of a target cell is higher than an absolute value. The event A5 indicates that signal quality of a serving cell is lower than an absolute value and signal quality of a target cell is higher than an absolute value.

It should be understood that the handover trigger condition may alternatively not be a trigger event of a conditional handover in the conventional technology. The handover trigger condition is not specifically limited in this application.

Optionally, the first configuration information may further indicate a target-cell selection rule. This rule defines a manner of selecting a target cell when a plurality of candidate target cells all satisfy the handover trigger condition.

For example, the target-cell selection rule may be: A cell with highest signal quality among candidate target cells that satisfy the handover trigger condition is selected as the target cell; the first configuration information may include priority information of each candidate target cell, and the terminal may select, as the target cell, a cell with a highest priority among candidate target cells that satisfy the handover trigger condition; or a cell with a smallest or largest identity among candidate target cells that satisfy the handover trigger condition is selected as the target cell based on identification information of cells. It should be understood that other appropriate target-cell selection rules may be alternatively used in this application.

Optionally, the first configuration information may further indicate an effective time of the first configuration information.

The first configuration information may explicitly or implicitly indicate the effective time of the first configuration information. In this application, the effective time of the first configuration information is the first time period. For example, a start moment of the first time period may be a time at which the terminal receives the first configuration information. Alternatively, a start moment of the first time period may be determined based on an offset in the first configuration information. For example, the start moment of the first time period may be a moment obtained by adding the offset to a time at which the terminal receives the first configuration information. For example, the first configuration information may further include an end moment or validity duration of the first time period. The start moment, the end moment, the offset, and the validity duration may be expressed in time units such as slots/frames/subframes, or may be expressed in absolute time units such as minutes/seconds/milliseconds. In addition, the offset and/or the validity duration may also be predefined or preconfigured.

S420: The network device #1 sends first configuration information to the terminal. Correspondingly, the terminal receives the first configuration information from the network device #1.

S430: The terminal performs mobility measurement and a cell handover based on the first configuration information.

The terminal may determine a cell sequence for consecutive handovers in the future time period based on the first configuration information, and may sequentially measure corresponding cells based on the measurement parameter needed to measure the candidate target cell. When the handover trigger condition is satisfied and the deactivation trigger condition is not satisfied, the terminal may be handed over to a corresponding cell based on a corresponding configuration. After a handover to a target cell is performed according to a sequence number of each hop in the cell sequence, measurement may be performed on a candidate target cell for a next hop, determine whether a handover trigger condition corresponding to the next hop is satisfied, and also determine whether a deactivation trigger condition is satisfied.

According to the cell handover method provided in this application, the network device may configure the cell sequence for consecutive handovers in the future time period for the terminal, and the terminal may perform consecutive handovers in the future time period based on the configuration of the network device. In a consecutive handover process, a network side no longer needs to perform measurement and reporting configuration for the terminal, and the terminal does not need to perform measurement reporting, thereby reducing a handover delay in addition to reducing signaling overheads. In addition, the deactivation trigger condition of the cell sequence for consecutive handovers is configured for the terminal, so that the terminal may no longer use the current cell sequence when determining, depending on an actual situation, that the cell sequence is inapplicable, thereby avoiding a handover to an inappropriate cell.

In a possible implementation, after the terminal is handed over to a target cell, a network device corresponding to the target cell may determine, based on a degree of matching between the target cell and a candidate target cell, whether consecutive-handover configuration needs to be performed again. For example, if the degree of matching is high, after a handover to the target cell is performed, the target cell may no longer re-predict a handover path for consecutive handovers and perform related configuration for the terminal based on the re-predicted handover path. In addition, the target cell coordinates with a candidate target cell for a next hop through an X2/N2 interface or the like to prepare resources. For example, if the degree of matching is low, a handover trigger condition configuration may be deactivated, and a conventional handover manner is used, or a handover trigger condition configuration is re-sent. The degree of matching is a matching degree or similarity between a sequence or a path of cells to which the terminal is actually handed over and a sent cell sequence. For example, if a handover sequence 1 is cell 1→cell 2→cell 3→cell 4, a handover sequence 2 is cell 1→cell 2→cell 3→cell 5, and a handover sequence 3 is cell 1→cell 3→cell 6, a degree of matching between the handover sequence 1 and the handover sequence 2 is 0.75, and a degree of matching between the handover sequence 1 and the handover sequence 3 is 0.5.

This scenario can be applied to a scenario in which the terminal is first handed over to a cell that does not belong to a candidate target cell and then handed over to a candidate target cell. FIG. 5A is used as an example. After the terminal is handed over from cell 1 to cell 2, cell 5 and cell 6 do not satisfy a corresponding handover trigger condition or satisfy a deactivation trigger event. According to an indication of the network side, the terminal is handed over to cell 10, and then handed over from cell 10 to cell 5. In this scenario, an actual handover path of the terminal is cell 1→cell 2→cell 10→cell 5, a handover path predicted by the network side is cell 1→cell 2→cell 5, and a degree of matching between the two paths is 0.75. If the degree of matching is greater than 0.5, it is considered that the degree of matching is high, and therefore the terminal may continue to use the cell sequence configured on the network side, to perform consecutive handovers.

In the foregoing solution, whether a cell sequence for consecutive handovers needs to be reconfigured may be determined based on the degree of matching between the target cell and the candidate target cell or between the actual handover path and the expected handover path, so that signaling overheads caused by unnecessary reconfiguration can be avoided while it is ensured that the terminal can be handed over to an appropriate cell.

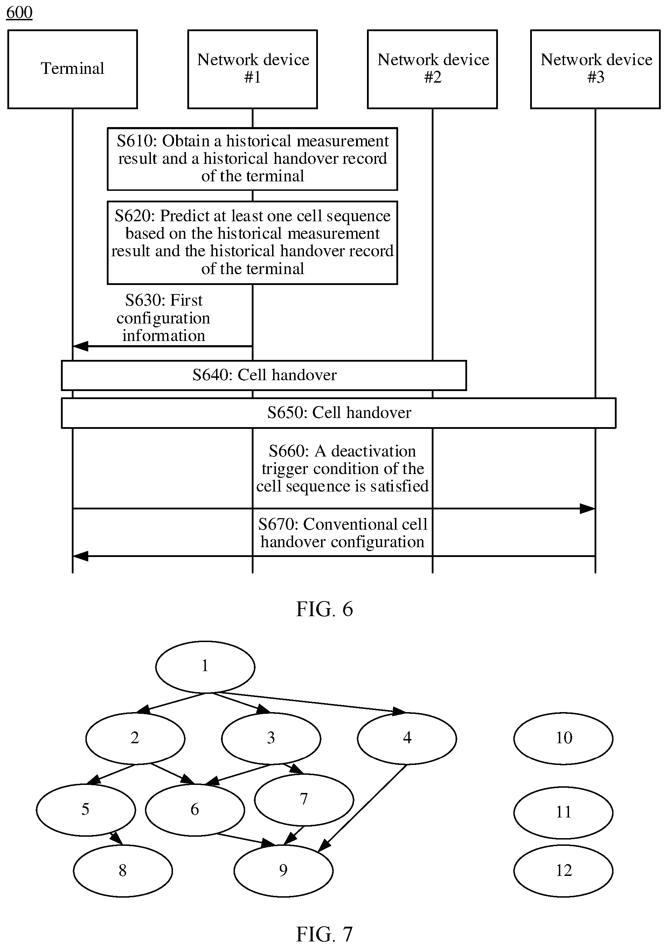

FIG. 6 is a schematic flowchart of a cell handover method according to this application. The method 600 is a specific implementation of the method 400. The method 600 may include one or more steps in S610 to S670. The following describes the steps in detail.

S610: A network device #1 obtains a historical measurement result and a historical handover record of a terminal.

The terminal may perform radio resource management (radio resource management, RRM) measurement reporting based on an existing RRM measurement configuration, and execute conventional handover instructions on a network side or perform a conventional conditional handover, to form a series of historical measurement results and historical handover records on the network side.

For example, if a current serving cell is cell M, historical measurement results may include: RRM measurement results of historical camped-on cells such as cell M, cell M-1, and cell M-2, where the RRM measurement results may include measurement results such as signal quality of current cells and neighboring cells of the camped-on cells. Correspondingly, a historical handover record is, for example, cell M-2→cell M-1→cell M.

For example, a specific quantity of cells or a specific quantity of handovers (hops) involved in historical measurement may be determined by the network side. In other words, the network device #1 can determine a specific quantity of cells whose measurement results are obtained by the terminal and/or a specific quantity of cell handovers on which statistics collection needs to be performed by the network device #1. For example, the network device #1 may collect statistics on historical measurement results in a time period, for example, measurement results within 20 days, and may predict at least one cell sequence based on the measurement results within the 20 days.

For example, the historical measurement result may be exchanged inside the network side. For example, the historical measurement result may be transferred from a source cell to a target cell through an X2/N2 interface or the like during a cell handover. Alternatively, through the X2/N2 interface, the current serving cell may request, from a cell on which a handover has historically been performed, to send related data that is present when the terminal camps on or performs a handover. This is not limited in this application.

In addition to the measurement result and the handover record, the network device #1 may further obtain a current or historical motion status (for example, a speed, an acceleration, an angular velocity, or gyroscope data), a motion track, and/or the like of the terminal. For example, the terminal may report the current or historical motion status, the motion track, and/or the like of the terminal during a cell handover or measurement reporting.

The foregoing provides descriptions of obtaining the historical measurement result and the historical handover record by the network side in the RRM measurement reporting manner of the terminal. In addition, the network device #1 may further indicate, by sending radio resource control (radio resource control, RRC) signaling, the terminal to report the historical measurement result and the historical handover record. The terminal may report the historical measurement result and the historical handover record to the network device #1 according to the indication of the RRC signaling. For example, the network device #1 may indicate, in a UE information request (UE Information Request) message, the terminal to report the historical measurement result and the historical handover record. Correspondingly, the terminal may include the historical measurement result and the historical handover record in a UE information request response (UE Information Request Response) message. In this manner, the corresponding measurement result and handover record only need to be reported by the terminal to the network device #1, and do not need to be exchanged between cells on which the terminal has historically camped.

S620: The network device #1 predicts at least one cell sequence based on the historical measurement result and the historical handover record of the terminal.

It should be noted that in this application, descriptions are provided mainly by using an example in which the network device (that is, an access network side) predicts the at least one cell sequence. In practice, the at least one cell sequence may be predicted by a core network.

For example, the network device #1 may first determine whether a cell sequence for handovers in a future time period can be predicted. For example, based on a statistical characteristic of historical measurement data, for example, whether fluctuation of a signal quality satisfies a predefined trend or threshold condition, whether a cell path for handovers satisfies a predefined handover track path, whether a speed reported by the terminal satisfies a specific condition, or whether a track reported by the terminal satisfies a predefined handover track path, the network device #1 may determine whether the cell sequence for consecutive handovers in the future time period can be predicted. Alternatively, there is a dedicated AI model on a side of the network device #1. An input of the model is a corresponding historical measurement result, and an output of the model is a flag indicating whether prediction can be performed or a corresponding probability of accurate prediction. If determining that the cell sequence for consecutive handovers in the future time period can be predicted, the network device #1 predicts the cell sequence for consecutive handovers in the future time period.

For example, the network device #1 may predict the cell sequence for consecutive handovers in the future time period by using an AI model. For example, inputs of the AI model may include a historical measurement result, and optionally may further include the current or historical motion status, the motion track, and/or the like of the terminal. It should be understood that the cell sequence predicted by the network device #1 is the at least one cell sequence in the method 400.

In a possible case, because a subsequent motion status of the terminal is uncertain, the network device #1 may predict the at least one cell sequence based on possible motion statuses of the terminal. In other words, the at least one cell sequence is applicable to different conditions. For example, some cell sequences are applicable to high-speed motion of the terminal, and some cell sequences are applicable to low-speed motion of the terminal.

With reference to the scenario shown in FIG. 5A, for example, (cell 2, cell 5, cell 8), (cell 2, cell 6), (cell 3, cell 6, cell 9), and (cell 3, cell 7, cell 9) are applicable to low-speed motion of the terminal, and (cell 4, cell 9) is applicable to high-speed motion of the terminal. For another example, with reference to FIG. 5C described above, cell 1→(cell 2, cell 3)→(cell 6) is applicable to high-speed motion of the terminal, and cell 1→(cell 4, cell 5)→(cell 7) is applicable to low-speed motion of the terminal.

S630: The network device #1 sends first configuration information to the terminal.

The network device #1 may generate the first configuration information, and then send the first configuration information to the terminal. Correspondingly, the terminal receives the first configuration information from the network device #1.

As described in the method 400, the first configuration information may indicate the at least one cell sequence and a deactivation trigger condition of the at least one cell sequence, and may further indicate one or more of the following: a handover trigger condition, a measurement parameter needed to measure a candidate target cell, a target-cell selection rule, and an effective time of the first configuration information.

In addition, the first configuration information may further indicate a usage condition associated with the at least one cell sequence. For example, the first configuration information may further indicate a speed class associated with the at least one cell sequence, and the speed class may be, for example, a high speed or a low speed.

In a possible implementation, the first configuration information includes the following content:

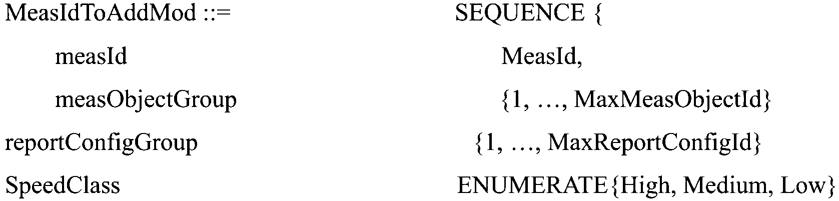

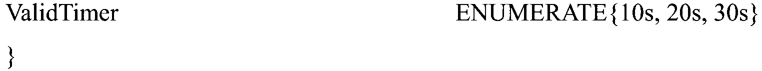

MeasIdToAddMod is a configuration related to one hop. measId is a measurement configuration identifier. measObjectGroup represents a plurality of groups of measurement objects, where each group of measurement objects may be corresponding to a measurement object corresponding to each hop in a cell sequence, that is, may be a cell list described in the foregoing implementation (2) of the first configuration information, and each group of measurement objects may be corresponding to one or more cells belonging to a same hop. A quantity of groups of measurement objects included in measObjectGroup can be understood as a length of a cell sequence. reportConfigGroup is a reporting configuration corresponding to a measurement object corresponding to each hop in a cell sequence, and may represent a trigger condition of a conditional handover of each hop, that is, a handover trigger condition, when a conditional handover manner is used for each hop. MaxMeasObjectId and MaxReportConfigId are maximum identifiers of a measurement object configuration and a reporting configuration. SpeedClass represents a speed class. ValidTimer represents a period of time within which the first configuration information can be used after the first configuration information takes effect.

In a possible implementation, the deactivation trigger condition of the at least one cell sequence may be the following SequentialEventA3 or SequentialEventA4. For example, a deactivation trigger condition configuration of the at least one cell sequence is as follows:

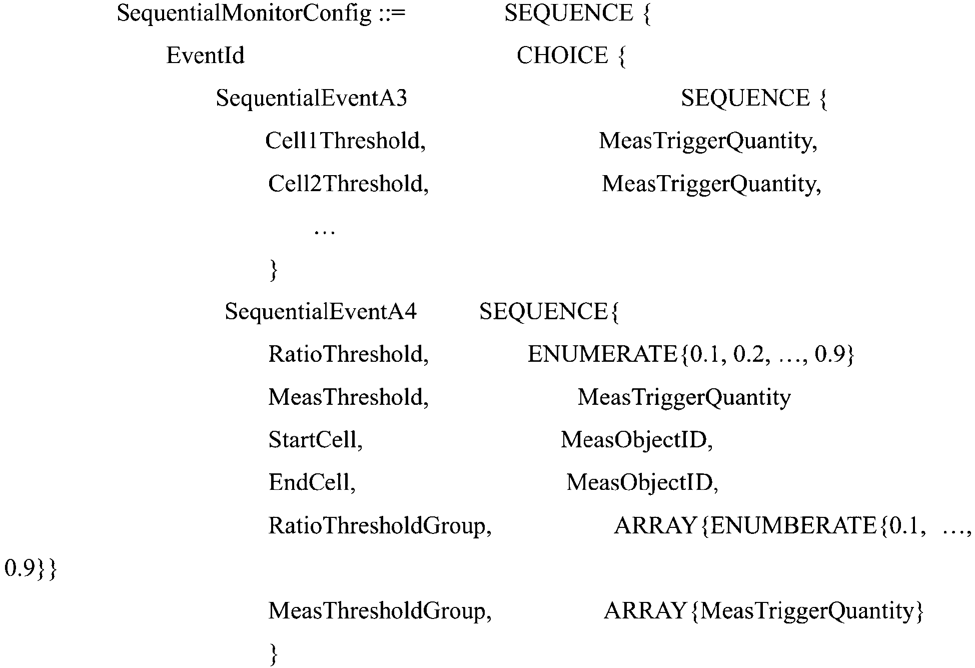

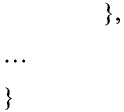

In the foregoing content, SequentialEventA3 is a configuration for determining, based on signal quality of a candidate target cell, whether the deactivation trigger condition is satisfied. For example, a corresponding determining threshold is configured for each candidate target cell for a current hop. For example, Cell1 Threshold and Cell2Threshold respectively represent thresholds configured for a candidate target cell 1 and a candidate target cell 2 for the hop. MeasTriggerQuantity is a signal quality type and a corresponding threshold, and the signal quality type may be an RSRP, an SINR, an RSRQ, or the like. It should be understood that SequentialEventA3 may be corresponding to (2b) described above. In this case, the proportion threshold in (2b) may be arbitrarily close to 0.

SequentialEventA4 is a configuration for determining, based on a proportion of cells whose signal quality satisfies a signal quality threshold in a handover sequence, whether the deactivation trigger condition is satisfied. For example, RatioThreshold represents a threshold of a proportion. MeasThreshold represents a signal quality type and a corresponding threshold, and StartCell and EndCell represent a start hop and an end hop for determining. For example, in the foregoing case of determining from the X^{th} hop to the Y^{th} hop, StartCell is corresponding to X, and EndCell is corresponding to Y. RatioThresholdGroup is a proportion threshold that is correspondingly set for each hop based on a proportion of cells for each hop whose signal quality satisfies a signal quality threshold. MeasThresholdGroup is a signal quality type and threshold used for correspondingly performing determining for each hop based on a proportion of cells for each hop whose signal quality satisfies a signal quality threshold. It should be understood that SequentialEventA4 may be corresponding to (1b) or (4b) described above.

For example, the SequentialMonitorConfig configuration may be carried in a reportConfig information element (similar to a trigger event of a conditional handover), or may be used as an independent information element and carried in a MeasConfig information element. Alternatively, a possible event in the configuration may be used as an event in another existing information element (for example, used as a new trigger event and stored in a trigger event list of the conditional handover). This is not limited. In this embodiment, for example, SequentialMonitorConfig is stored in the reportConfig information element. In this way, each SequentialMonitorConfig is bound to one measObject, so that determining can be performed at a location of each hop.

It should be understood that, before a cell sequence is reconfigured, the terminal no longer uses the at least one cell sequence, or the first configuration information becomes invalid, the terminal keeps storing the first configuration information.

S640: The terminal is handed over to a network device #2 based on the first configuration information.

The terminal measures a candidate target cell for a first hop based on the first configuration information. For example, if the at least one cell sequence indicated by the first configuration information is associated with different speed classes, the corresponding candidate target cell for the first hop may be determined based on a speed status of the terminal, and cell measurement is performed. In addition, the terminal may further determine whether the deactivation trigger condition is satisfied.

The cell handover situation shown in FIG. 5A is used as an example. The terminal measures the candidate target cells for the first hop: cell 2, cell 3, and cell 4. If determining that cell 2 satisfies the handover trigger condition and does not satisfy the deactivation trigger condition, the terminal is handed over to cell 2, where a network device corresponding to cell 2 is the network device #2.

S650: The terminal is handed over to a network device #3 based on the first configuration information.

This step is similar to S640. For details, refer to S640. In this step, the terminal is handed over from cell 2 to cell 5, where a network device corresponding to cell 5 is the network device #3.

S660: If determining that the deactivation trigger condition is satisfied, the terminal sends second reporting information to the network device #3.

The second reporting information indicates that the terminal satisfies the deactivation trigger condition.

For example, the second reporting information may be sent by using RRC signaling, a medium access control control element (medium access control control element, MAC-CE), or uplink control information (uplink control information, UCI).

The second reporting information may include the satisfied deactivation trigger condition (for example, SequentialEventA3 or SequentialEventA4). Optionally, the second reporting information may further include a specific measurement value that is present when the deactivation trigger condition is satisfied.

For example, the satisfied deactivation trigger condition may be indicated in a header of the MAC-CE. For example, the network device #1 may configure, in the first configuration information, a time-frequency domain resource for carrying the UCI and semantics of corresponding UCI bits. For example, a 10-bit (bit) is allocated for carrying the UCI, a first bit indicates whether the deactivation trigger condition is satisfied, and subsequent bits may further indicate specific measurement values.

S670: The network device #3 configures a conventional handover measurement related configuration for the terminal based on the second reporting information, and the terminal performs a cell handover by using a conventional handover mechanism.

According to the cell handover method provided in this application, the network device may configure the cell sequence for consecutive handovers in the future time period for the terminal, and the terminal may perform consecutive handovers in the future time period based on the configuration of the network device. In a consecutive handover process, the network side no longer needs to perform measurement and reporting configuration for the terminal, and the terminal does not need to perform measurement reporting, thereby reducing a handover delay in addition to reducing signaling overheads. In addition, the deactivation trigger condition of the cell sequence for consecutive handovers is configured for the terminal, so that the terminal may no longer use the current cell sequence when determining, depending on an actual situation, that the cell sequence is inapplicable, thereby avoiding a handover to an inappropriate cell.

It can be understood that one or more steps in S640 to S670 are performed only when some conditions are satisfied, and are not necessarily performed. For example, if it is determined in S640 that the deactivation trigger condition is satisfied, the terminal does not perform S650 to S670, but may report to the network device #1 that the terminal satisfies the deactivation trigger event. The network device #1 may configure the conventional handover measurement related configuration for the terminal. For example, in S650, the network device #2 may further determine, based on a degree of matching between the target cell and a candidate target cell, whether a cell sequence needs to be re-sent to perform consecutive-handover configuration. For details, refer to the foregoing descriptions of the content.

In a possible implementation, the first configuration information may further indicate a monitoring cell associated with the candidate target cell and a corresponding monitoring reporting condition. The monitoring cell is used to determine whether the corresponding candidate target cell is applicable, and the monitoring cell is different from the corresponding candidate target cell.

Each hop may be associated with one or more monitoring cells, or all hops may be associated with one or more same monitoring cells. Each hop may be associated with a monitoring reporting condition, or all hops may be associated with a same monitoring reporting condition. A monitoring cell associated with each hop does not belong to a candidate target cell for the hop, and there may be one or more monitoring cells associated with each hop.

For example, with reference to a diagram shown in FIG. 7, for the handover scenario shown in FIG. 5A, a monitoring cell for a first hop may be cell 10, a monitoring cell for a second hop may be cell 11, and a monitoring cell for a third hop may be cell 12.

According to this solution, the monitoring cell that does not belong to the candidate target cell is configured. This is conducive for determining whether the cell sequence configured on the network side is appropriate. If the cell sequence is inappropriate, the cell sequence may be deactivated in time to avoid a subsequent handover to an inappropriate cell.

For example, a network may predict a cell sequence for handovers based on an AI model. AI models are usually data-driven, and consequently are subject to limitations in generalization. Effect of a same AI model may vary with usage scenarios and usage time periods. Therefore, to ensure system performance after AI is used, a corresponding AI function or model may be monitored. Once performance deterioration is detected, a corresponding AI model may be replaced or not be used in time.

For single-end AI with AI mobility, an AI model may be monitored by a side that uses the AI model. In this embodiment of this application, an AI model may be monitored by the network side, but the network side needs to determine, based on some necessary information inputs, whether a current output result of the model is correct.

In the methods 400 and 600, an output of the network-side AI model is a cell sequence for consecutive handovers in a subsequent time period. In this case, a manner of detecting whether the output cell sequence for consecutive handovers is appropriate is to determine, when the terminal uses the corresponding sequence for consecutive handovers, whether the deactivation trigger condition is satisfied. However, the method is only used for performing related detection on the cell sequences configured in the methods 400 and 600, and cannot be used for determining whether the model output is incorrect or a current channel environment is indeed poor (for example, due to sudden blockage). Therefore, to control a variable, a concept of monitoring cells may be further introduced, that is, some cells that are not in the cell sequence for consecutive handovers are configured. The terminal may also perform related measurement on these cells. If it is found that signal quality of the monitoring cells is desirable, but quality of a cell in the cell sequence for handovers is poor, it may be determined that the model output is incorrect.

Optionally, when a monitoring result of the monitoring cell satisfies the monitoring reporting condition, the terminal may further send reporting information (for example, first reporting information) to the network device, where the reporting information indicates that the monitoring result of the monitoring cell satisfies the monitoring reporting condition. In this manner, the terminal performs reporting only when the monitoring result of the monitoring cell satisfies the monitoring reporting condition.

Alternatively, the terminal may send reporting information to the network device, where the reporting information may indicate whether the monitoring result of the monitoring cell satisfies the monitoring reporting condition. In this manner, the terminal performs reporting regardless of whether the monitoring result of the monitoring cell satisfies the monitoring reporting condition.

For example, the reporting information may be reported by using RRC, a MAC-CE, UCI, or the like.

For example, the reporting information may be sent in the current serving cell, or may be sent after a handover to a new cell is performed. For example, after an RRC connection is established in the new cell, the reporting information is sent along with a corresponding RRC reconfiguration message and the like, to indicate that a monitoring report needs to be sent. Then, the new cell requests, by using RRC signaling UEInformationRequest or the like, the terminal to perform reporting.

For example, the monitoring reporting condition is: Signal quality of the monitoring cell is greater than a first threshold, and signal quality of the candidate target cell corresponding to the monitoring cell is less than a second threshold, where the first threshold is greater than the second threshold. That the signal quality of the candidate target cell corresponding to the monitoring cell is less than the second threshold may mean: The signal quality of all the candidate target cell corresponding to the monitoring cell is less than the second threshold, or an average signal quality value of the candidate target cells corresponding to the monitoring cell is less than the second threshold. It should be understood that the first threshold and the second threshold herein may be different from the first threshold and the second threshold described above.

The scenario shown in FIG. 5A is used as an example. If the terminal detects, in cell 1, that the signal quality of cell 2, cell 3, and cell 4 is all less than the first threshold, and signal quality of cell 10 is greater than the first threshold, the terminal reports an event that a monitoring result of cell 10 satisfies the monitoring reporting condition to the network device #1.

In a scenario in which one hop is associated with a plurality of monitoring cells, for example, the monitoring reporting condition includes: Signal quality of all the monitoring cells is greater than a corresponding threshold, or signal quality of any monitoring cell is greater than a corresponding threshold. Optionally, the monitoring reporting condition further includes: Signal quality of all candidate target cells corresponding to the monitoring cells is less than a corresponding threshold, or signal quality of any candidate target cell is less than a corresponding threshold.

In a scenario in which one hop is associated with a plurality of monitoring cells, for example, at least one of candidate target cells for the hop is associated with one monitoring cell. If signal quality of a candidate target cell is less than a threshold #1, and signal quality of a monitoring cell associated with the candidate target cell is greater than a corresponding threshold #2, it is considered that an event #1 is satisfied. If a proportion of monitoring cells that satisfy the event #1 in the monitoring cells is higher than a specific threshold, it is considered that the monitoring reporting condition is satisfied. For example, the specific threshold may be 1/2. For example, if two monitoring cells in three monitoring cells all satisfy the event #1, it is considered that the monitoring reporting condition is satisfied. The specific threshold may be predefined, or may be configured by the network device. Optionally, the threshold may not exist. For example, it is considered that the monitoring reporting condition is satisfied, provided that the event #1 is satisfied at least once.

For example, in cells associated with consecutive handovers from a U^{th} hop to a V^{th} hop, if a quantity of cells with best signal quality that are candidate target cells/(V-U+1) is less than a threshold #3, it is considered that a monitoring reporting event is satisfied. Alternatively, in cells associated with consecutive handovers from a U^{th} hop to a V^{th} hop, if a quantity of cells with best signal quality that are monitoring cells/(V-U+1) is greater than a threshold #4, it is considered that a monitoring reporting event is satisfied. The cell with the best signal quality may be replaced with a cell that satisfies a signal quality threshold. The signal quality threshold may be a common value, or may be separately configured for each hop.

For example, the cells associated with consecutive handovers from the U^{th} hop to the V^{th} hop include: a candidate target cell for each hop from the U^{th} hop to the V^{th} hop and a monitoring cell for each hop from the U^{th} hop to the V^{th} hop. U may be equal to 1, or may be an integer greater than 1, V≥U, and V may be a quantity of hops experienced plus 1.

It is assumed that U=1, and the threshold #3=0.8. FIG. 7 is used as an example for description. Candidate target cells for the first hop are cells {2, 3, 4}, and the corresponding monitoring cell is cell 10. If a cell with best signal quality in cells {2, 3, 4, 10} is one of the cells {2, 3, 4}, a quantity of cells with the best signal quality that are candidate target cells/(V-U+1) is equal to 1, and 1 is greater than the threshold #3, and therefore the monitoring reporting condition is not satisfied. If the terminal is handed over from cell 1 to cell 2, candidate target cells for the second hop are cells {5, 6}, and the corresponding monitoring cell is cell 11. If a cell with best signal quality in cells {5, 6, 11} is cell 11, a quantity of cells with the best signal quality that are monitoring cells/(V-U+1) is less than the threshold #4, and therefore the monitoring reporting condition is not satisfied.

For example, a monitoring cell configuration may be included in a measurement configuration information element, or a monitoring cell configuration may be an independent information element configuration, and does not necessarily need to be associated with a measurement configuration for each hop in a sequence.

In a possible implementation, when the monitoring result of the monitoring cell reported by the terminal satisfies the monitoring reporting event, the network device may re-predict a cell sequence, and may send second configuration information similar to the first configuration information to the terminal. The terminal may perform a cell handover based on the second configuration information.

According to this solution, when the cell sequence for consecutive handovers that is previously configured on the network side is inappropriate, a cell sequence for consecutive handovers may be reconfigured for the terminal. This is conducive for the terminal to perform an appropriate cell handover. For example, in the method 600, after being handed over to the network device #2, if the terminal detects that a monitoring result of cell 10 satisfies the monitoring reporting condition, the terminal reports an event that the monitoring result of cell 10 satisfies the monitoring reporting condition to the network device #2. After receiving the reporting information of the terminal, the network device #2 may reconfigure information related to consecutive handovers for the terminal. It should be understood that in this scenario, because the reconfigured cell sequence, a handover trigger event, or the like may be different from that in the first configuration information, the terminal may not perform S650 to S670.

In an example, a configuration related to the monitoring cell is as follows:

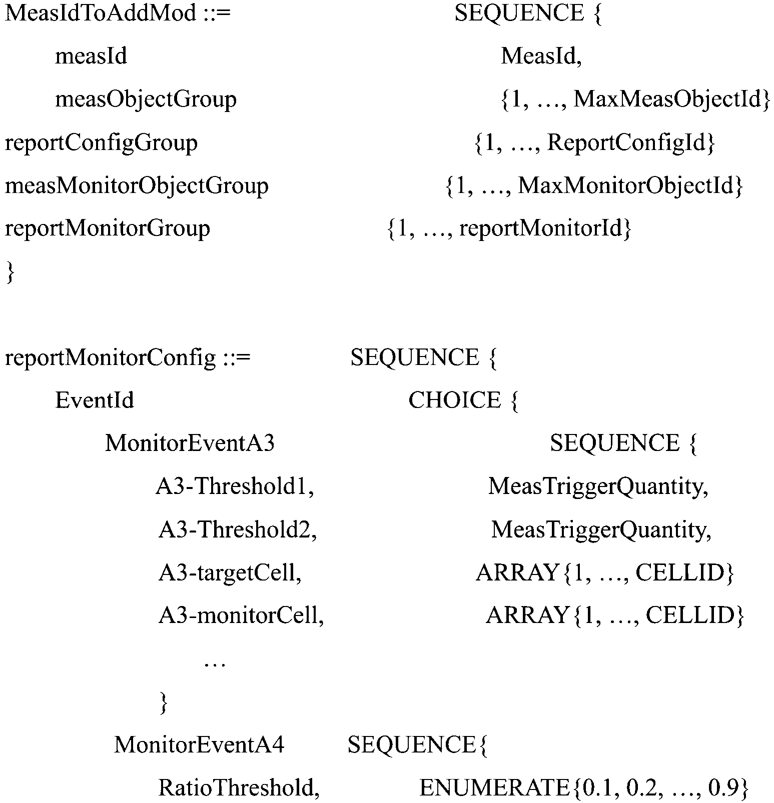

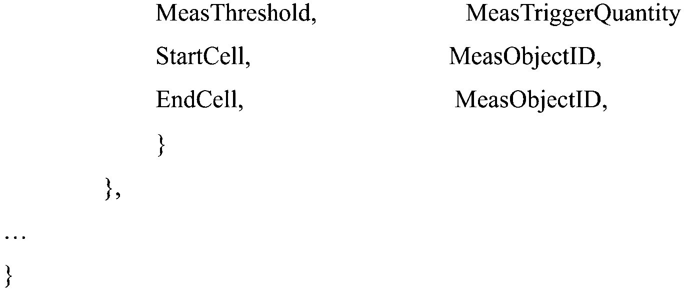

measId, measObjectGroup, and reportConfigGroup are the same as those described above. measMonitorObjectGroup is a measurement object corresponding to one group of monitoring cells, where one MonitorObject is corresponding to a monitoring cell associated with a candidate target cell for one hop in a handover sequence. reportMonitorGroup is a reporting configuration corresponding to one group of monitoring cells, where a reporting trigger event (that is, a monitoring reporting condition) for a monitoring result of the monitoring cell is configured. Each reporting configuration may be corresponding to a reporting trigger configuration for each monitoring measurement object, or may be corresponding to reporting trigger configurations for a plurality of monitoring measurement objects. For example, a reporting event MonitorEventA3 may be configured in the reporting configuration, where the event is a trigger event based on whether signal quality of a candidate target cell and a monitoring cell for a current hop satisfies a threshold condition. Threshold1 and Threshold2 are configured signal quality types and corresponding thresholds, and targetCell and monitorCell are identifiers of a candidate target cell and a monitoring cell to be determined. For example, a reporting event MonitorEventA4 may be configured in the monitoring reporting event, where the event is a trigger event based on whether a proportion of optimal cells in a candidate target cell and a monitoring cell for consecutive handovers or cells that satisfy a signal threshold in a handover sequence satisfies a threshold. RatioThreshold is a threshold of a proportion, and MeasThreshold is a signal quality type and a corresponding threshold. StartCell and EndCell are identifiers of a start hop and an end hop for consecutive handovers used for statistics.

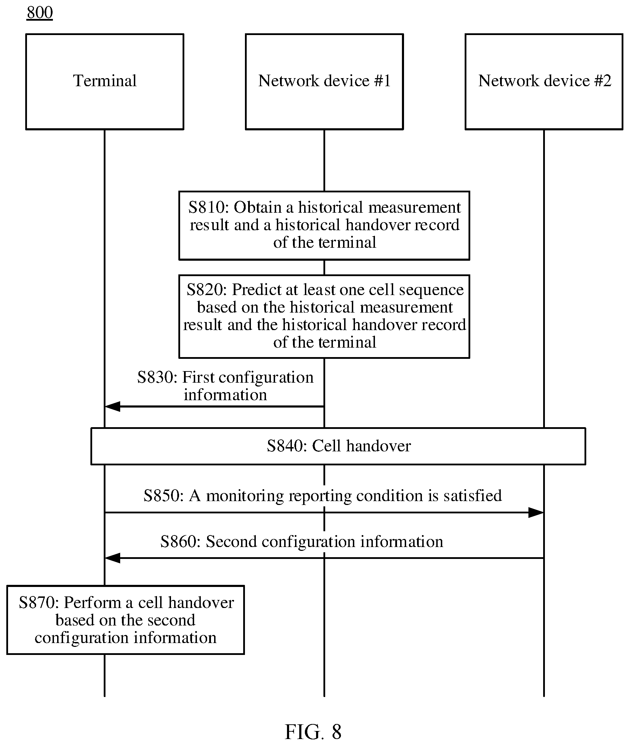

FIG. 8 is a schematic flowchart of a cell handover method according to this application. The method 800 is a specific implementation of the method 400. The method 800 may include one or more steps in S810 to S870. The following describes the steps in detail.

S810: A network device #1 obtains a historical measurement result and a historical handover record of a terminal. This step is the same as S610. For details, refer to S610.

S820: The network device #1 predicts at least one cell sequence based on the historical measurement result and the historical handover record of the terminal. This step is the same as S620. For details, refer to S620.

S830: The network device #1 sends first configuration information to the terminal.

For this step, refer to S630. A difference from S630 lies in that the first configuration information in this case may further include a monitoring cell associated with the candidate cell and a corresponding monitoring reporting condition. For the monitoring cell and the monitoring reporting condition, refer to the foregoing descriptions. Details are not described herein again.

S840: The terminal is handed over to a network device #2 based on the first configuration information.

The terminal measures a candidate target cell for a first hop based on the first configuration information. For example, if the at least one cell sequence indicated by the first configuration information is associated with different speed classes, the corresponding candidate target cell for the first hop may be determined based on a speed status of the terminal, and cell measurement is performed. In addition, the terminal may further determine whether the deactivation trigger condition and the monitoring reporting condition are satisfied.

FIG. 7 is used as an example. The terminal measures the candidate target cells for the first hop: cell 2, cell 3, and cell 4. If determining that cell 2 satisfies the handover trigger condition and does not satisfy the deactivation trigger condition and the monitoring reporting condition, the terminal is handed over to cell 2, where a network device corresponding to cell 2 is the network device #2.

S850: If the monitoring reporting condition is satisfied, send first reporting information to the network device #2, where the first reporting information indicates that a monitoring result of the monitoring cell satisfies the monitoring reporting condition.

S860: The network device #2 sends second configuration information to the terminal, where the second configuration information is similar to the first configuration information, and is used to perform consecutive-handover configuration for the terminal. For example, the second configuration information may include a reconfigured cell sequence.

S870: The terminal performs a cell handover based on the second configuration information.

For example, the terminal is handed over from the network device #2 to a network device #3 based on the second configuration information.

It should be understood that, for a manner of performing the cell handover by the terminal based on the second configuration information, refer to the foregoing related descriptions of performing the cell handover by the terminal based on the first configuration information. Details are not described herein again.

It should also be understood that, when determining whether the monitoring reporting condition is satisfied, the terminal may further determine whether the deactivation trigger condition is satisfied. The two determining operations can be performed in any order and are independent of each other.

According to the cell handover method provided in this application, the network device may configure the cell sequence for consecutive handovers in the future time period for the terminal, and the terminal may perform consecutive handovers in the future time period based on the configuration of the network device. In a consecutive handover process, a network side no longer needs to perform measurement and reporting configuration for the terminal, and the terminal does not need to perform measurement reporting, thereby reducing a handover delay in addition to reducing signaling overheads. In addition, the monitoring cell that does not belong to the candidate cell is configured for the terminal, so that the terminal can determine whether the currently sent cell sequence for consecutive handovers is appropriate, thereby facilitating an appropriate cell handover.

In all the solutions described above, the network device predicts the target cell, and the terminal side does not participate in prediction. In view of this problem, this application further provides a cell handover method, to implement prediction on the terminal side. For example, a cell handover path predicted by the terminal is the handover path shown in FIG. 5A. With reference to related accompanying drawings, the following describes the methods in detail.

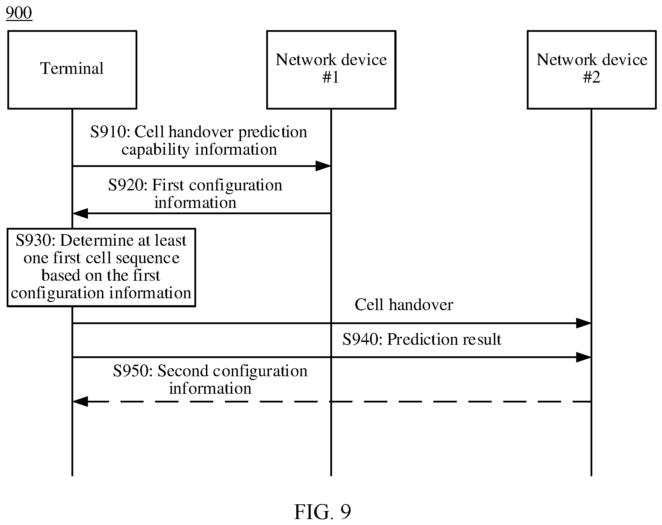

FIG. 9 is a schematic flowchart of a cell handover method according to this application. The method 900 may include S920 to S940, and optionally may further include S910 and/or S950. The following describes the steps.

S910: A terminal sends cell handover prediction capability information of the terminal to a network device #1. Correspondingly, the network device #1 receives the cell handover prediction capability information.

The cell handover prediction capability information indicates that the terminal supports a consecutive-handover prediction capability for a time period, and the cell handover prediction capability information includes prediction capability parameters. The prediction capability parameters may include a prediction capability parameter supported by the terminal and a parameter needed by the terminal for prediction. For example, the handover prediction capability information may be included in UE capability information (UECapabilityInformation) for sending, or may be included in an independent information element for sending. This is not limited.

For example, the prediction capability parameters may include one or more items in Table 1.

**Table 1**

| Prediction capability parameter | Description/Meaning |
|---|---|
| Quantity of consecutive handovers capable of being predicted by the terminal, that is, quantity of handovers (hops) capable of being predicted by the terminal | The parameter indicates a quantity of consecutive handovers (hops) in a future time period capable of being predicted by the terminal. The parameter is a positive integer, for example, 1, 2, or 3. |
| Quantity of cells capable of being predicted by the terminal | The parameter indicates a quantity of candidate target cells that can be predicted for each hop. |
| Cell parameter capable of being predicted by the terminal | The parameter may include one or more of the following: a frequency, a band/frequency band number, a subcarrier spacing, a tracking area code, a cell identity, and a physical cell identifier. |
| | Frequencies associated with all hops may be the same, or one or more frequencies/bands/frequency bands/subcarrier spacings are associated with a cell for each hop. A frequency may be represented by a frequency channel number, for example, an E-ARFCN or an NR-ARFCN. The E-ARFCN is an E-UTRA absolute radio-frequency channel number (absolute radio-frequency channel number, ARFCN), and E-UTRA is evolved UMTS terrestrial radio access (evolved universal terrestrial radio access). The NR-ARFCN is a new radio ARFCN. |
| | Band numbers/frequency band numbers associated with all hops may be the same, or one or more band numbers/frequency band numbers are associated with a cell for each hop. The band numbers/frequency band numbers are, for example, n79/n710. |
| Validity duration capable of being predicted by the terminal | The parameter indicates validity duration of a prediction result of the terminal. The duration may be expressed in absolute time units such as seconds/milliseconds, for example, 110 ms/1s/5s. Alternatively, the duration may be expressed in time units. For example, the duration is three time units. The time unit may be, for example, a subframe/slot. |
| Quantity of cells needed for measurement by the terminal | The parameter indicates a quantity of cells whose measurement results are needed by the terminal or a quantity of handovers (hops) needed by the terminal to perform consecutive-handover prediction. |
| Cell parameter needed for measurement by the terminal | The parameter is a related cell parameter that needs to be obtained by the terminal during cell measurement, and may include, for example: |
| | a frequency used by a cell; |
| | a band/frequency band used by a cell; |
| | a subcarrier spacing of a cell; |
| | a tracking area code of a cell; |
| | a physical cell identifier; or |
| | a cell identity. |
| Duration needed for measurement by the terminal | The parameter indicates duration for which measurement of historical cells needs to be maintained, that is, a period of time needed by the terminal to perform measurement for prediction. |
| Reference signal (reference signal, RS) configuration needed for measurement by the terminal | RS type used for measurement (SSB/CSI-RS); |
| | RS period used for measurement; and time-frequency domain position of an RS used for measurement. |
| Historical handover related conditions needed before prediction | For example, prediction can be performed only when a quantity of historical handovers is X, an interval between handovers is Y seconds, and signal quality during the historical handovers satisfies a threshold Z. |
| Generalization capability of the terminal's prediction | The parameter indicates whether the terminal's prediction is generalized. TRUE/FALSE may be used to indicate whether the terminal's prediction is applicable to all scenarios or is applicable only to some scenarios. |
| | When generalization is limited, the parameter may further indicate a scenario in which the terminal's prediction is applicable, for example, a high-speed/low-speed scenario, a dense network deployment scenario/sparse network deployment scenario, or an indoor scenario/outdoor scenario. |

S910 is an optional step. For example, some parameters in S910 may be default. For example, all terminals or terminals of some types/specifications/models may have a consecutive-handover prediction capability for a time period by default. For another example, one or more of the following are default or set to default (for example, specified in a protocol): a quantity of consecutive handovers, a quantity of cells, a cell parameter, and validity duration that are capable of being predicted by all terminals or terminals of some types/specifications/models, and a quantity of cells, and duration needed for measurement by these terminals.

S920: The network device #1 sends first configuration information to the terminal. Correspondingly, the terminal receives the first configuration information from the network device #1.

The first configuration information is determined by the network device #1 based on the cell handover prediction capability information of the terminal, and the first configuration information may include a measurement object configuration.

For example, the measurement object configuration may include one or more of the following:
measurement validity duration or a measurement validity time period, that is, duration or a time period of continuous measurement, which may further include parameters such as a start time point of measurement and an end time point of measurement, and is used to determine a specific measurement time period;
a to-be-measured frequency;
a quantity of to-be-measured historical cells, a quantity of to-be-measured handovers (hops), or a specific list of to-be-measured cells; and
an interval/a period and the like of a measured RS.

In an understanding, that the network device #1 sends the first configuration information to the terminal means that the network device #1 configures, for the terminal, an AI function or an AI function entity used for predicting a cell sequence for handovers. It should be understood that the configuration information, that is, the AI function used for predicting the cell sequence for handovers, may not be limited to the first configuration information, or may further include other configuration information in addition to the first configuration information.

S930: The terminal determines at least one first cell sequence based on the first configuration information.

The terminal may predict the at least one first cell sequence based on the measurement object configuration in the first configuration information and related measurement results. For example, the terminal may input a current measurement result and a historical measurement result into an AI model based on the measurement object configuration in the first configuration information, to obtain a cell sequence for handovers in a future time period, that is, the at least one first cell sequence. The first cell sequence includes at least one candidate target cell, and the at least one candidate target cell is a target cell that is predicted by the terminal and to which the terminal may be sequentially handed over in the first time period.

For example, when predicting the cell sequence, the terminal may further predict one or more of the following: cell information of the candidate target cell, a probability of correctly predicting the candidate target cell, a handover time point for each hop in the cell sequence, and predicted validity duration of the cell sequence.

The cell information may include one or more of the following: a cell ID, a physical cell ID (PCI), a frequency of the cell, a frequency band of the cell, a subcarrier spacing of the cell, a tracking area coder (Tracking Area Code, TAC) to which the cell belongs, and the like. The predicted validity duration of the cell sequence is a validity duration predicted for the cell sequence.

S940: The terminal sends a prediction result to a network device #2. Correspondingly, the network device #2 receives the prediction result.

The prediction result indicates the at least one first cell sequence.

For example, the prediction result may include one or more of the following: information about a cell in the first cell sequence, a probability of correctly predicting a cell in the first cell sequence, a handover time point for each hop in the first cell sequence, or predicted validity duration of the first cell sequence.

It should be noted that the network device #2 is a network device currently accessed by the terminal, and may be the network device #1 or may not be the network device #1. For example, the terminal needs to perform two-hop handovers to perform consecutive-handover prediction. If the terminal obtains the prediction result based on historical two-hop handovers when accessing the network device #1, the terminal may send the prediction result to the network device #1. If the terminal obtains the prediction result based on two-hop handovers after being handed over from the network device #1 to another network device and then handed over from the another network device to the network device #2, the terminal may send the prediction result to the network device #2.

S950: The network device #2 sends second configuration information to the terminal. Correspondingly, the terminal receives the second configuration information from the network device #2.

In an implementation, after receiving the prediction result, the network device #2 determines to perform consecutive handovers by using a conventional cell handover or a conditional handover. In this case, the network device #2 may determine the second configuration information based on the prediction result, and send the second configuration information to the terminal. For example, the network device #2 may optimize the prediction result of the terminal based on some information, to generate and send the second configuration information.

In an example, the second configuration information may be similar to the first configuration information in the method 400, the method 600, or the method 800, and consecutive handovers including at least one handover may be implemented through one configuration. For example, the second configuration information may indicate at least one second cell sequence. The second cell sequence includes at least one second candidate target cell, and the at least one candidate target cell is a target cell to which the terminal may be sequentially handed over in the first time period. The at least one second cell sequence may be the same as or partially different from the at least one first cell sequence.

In another example, the second configuration information may be similar to the RRM measurement configuration in the conventional technology, that is, only related information used for one handover is configured. A difference from the current technology lies in that the cell in the second configuration information herein is determined based on the prediction result reported by the terminal. For example, the second configuration information may include cell information that needs to be measured for this handover, and a handover trigger condition of the conditional handover or a measurement reporting condition of the conventional cell handover. For example, the second configuration information may include a handover trigger condition or a measurement reporting condition associated with each hop, or include only a handover trigger condition or a measurement reporting condition associated with a next hop.

It should be understood that the conventional cell handover is a cell handover in which the terminal sends handover-related measurement results and a network side sends a handover command.

In another implementation, after receiving the prediction result, the network device #2 may determine to perform a cell handover in a blind handover manner. In this case, the network device #2 does not need to perform S950. It should be understood that blind handover means that the network device directly delivers a handover command to notify the terminal to perform a cell handover, and the terminal does not need to perform cell measurement or initiate a handover request.

It should be understood that the second configuration information may be a mobility-related measurement/reporting configuration in an existing LTE/NR system, that is, related to only one handover. In this case, the terminal reports a consecutive-handover prediction result, and the network side uses the second configuration information to perform, based on each handover (hop) in the prediction result, measurement or reporting configuration needed for the corresponding handover. The measurement/reporting configuration in the second configuration information may be used for only one handover, and does not need to be used for a plurality of consecutive handovers.

According to the cell handover method provided in this application, the network side may perform related configuration for performing consecutive-handover prediction for the terminal based on the cell handover prediction capability information of the terminal, and the terminal may predict the cell sequence for handovers in the future time period based on the configuration of the network side. In this way, consecutive-handover prediction on a terminal side is implemented. Further, by reporting the prediction result to the network side, the terminal may assist the network side in performing a cell handover or determining the cell sequence for handovers that is more appropriate for the terminal, and performing cell handover related configuration.

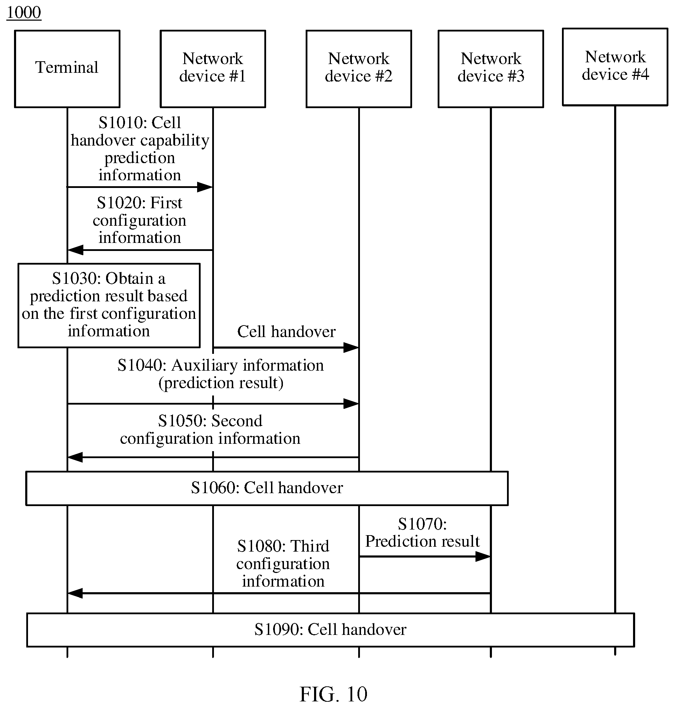

FIG. 10 is a schematic flowchart of predicting a cell sequence for handovers and performing a cell handover by applying the method shown in FIG. 9. For terms, concepts, or the like in the method 1000 that are the same as those in FIG. 9, refer to descriptions of the corresponding terms and concepts in the method 900.

S1010: A terminal sends cell handover prediction capability information of the terminal to a network device #1. Correspondingly, the network device #1 receives the cell handover prediction capability information.

This step is the same as S910. For details, refer to S910.

S1020: The network device #1 sends first configuration information to the terminal based on the cell handover prediction capability information reported by the terminal.

This step is the same as S920. For details, refer to S920.

In an example, the first configuration information may include the following content:

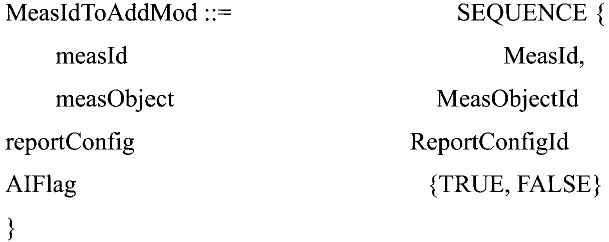

measId represents a measurement ID. measObject is a measurement object configuration. reportConfig is a reporting configuration. AIFlag represents that the current measurement object configuration may be used for AI handover prediction on a terminal side, that is, the terminal may perform AI handover prediction based on measurement results of measurement objects in the configuration, or report a reporting manner of an AI prediction result configuration to the network device, so that the network device knows that the reporting is AI prediction-based reporting.

For example, the reporting configuration may be that the network device #1 enables the terminal to report a prediction result by reporting auxiliary information, and the terminal determines whether to report the prediction result. For example, the network device #1 may add, through RRC configuration, a piece of auxiliary information for reporting to an OtherConfig information element, to allow the terminal to report the prediction result by using the UE auxiliary information.

Generally, reporting of the auxiliary information of the terminal is determined and triggered by the terminal. In one manner, the network device #1 may perform configuration so that reporting of the auxiliary information needs to be performed based on the measurement object configuration, that is, whether the auxiliary information is triggered is associated with the measurement object configuration. In this case, reporting of the auxiliary information is associated with the measurement object configuration, or the measurement object configuration is associated with a configuration of the auxiliary information.

Optionally, the first configuration information may further indicate expiration time/an invalidation condition of a prediction function.

Expiration time: For example, after receiving the first configuration information, the terminal starts an expiration timer. After the expiration timer expires, it is considered that the terminal cannot provide a related prediction capability, and the terminal may no longer perform related prediction within a time period.

Invalidation condition: For example, if signal quality measured by the terminal is lower than a specific threshold, or a speed of the terminal is higher than a specific threshold, it is considered that the terminal currently cannot provide a related prediction capability, and the terminal may no longer perform related prediction within a time period.

S1030: The terminal obtains the prediction result based on the first configuration information.

For this step, refer to S930.

S1040: The terminal sends the prediction result to a network device #2. Correspondingly, the network device #2 receives the prediction result.

For example, if a cell sequence for a time period satisfies a determining threshold of the terminal, the terminal may be triggered to report the prediction result by using the auxiliary information.

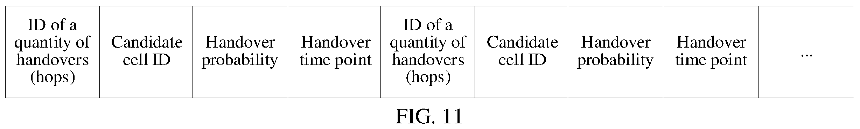

For example, a format of the cell sequence reported by the terminal is shown in FIG. 11. The prediction result may include information in FIG. 11. As shown in FIG. 11, the first configuration information may include an ID of a quantity of handovers (hops), a candidate target cell ID corresponding to the predicted quantity of handovers (hops), a predicted probability of handing over the terminal to the foregoing candidate target cell (namely, a handover probability), and a predicted handover time point. The predicted handover time point may be an absolute time, or may be an offset time relative to a reporting moment. This is not limited in this application. It should be understood that the candidate target cell ID corresponding to the quantity of handovers (hops) in the figure is not limited to one cell ID. Content after the ID of the quantity of handovers (hops) does not need to be carried in the first configuration information. For example, the predicted probability of handing over the terminal to the foregoing candidate target cell may not exist.

The auxiliary information may be carried by using RRC, and may be carried by using a MAC-CE, UCI, or the like.

For the prediction result, refer to the description in S940. Details are not described herein again.

S1050: The network device #2 sends second configuration information to the terminal based on the prediction result of the terminal. Correspondingly, the terminal receives the second configuration information from the network device #2.

For description of the second configuration information, refer to S950. Herein, that at least one second cell sequence indicated by the second configuration information is the same as the at least one first cell sequence and the second configuration information includes a handover trigger condition for a next hop is used as an example to describe subsequent steps.

S1060: The terminal is handed over from the network device #2 to a network device #3 based on the second configuration information.

For example, the cell sequence predicted by the terminal is applicable to the case shown in FIG. 5A. When the network device #2 is a source network device, the terminal may measure the candidate target cells (cell 2, cell 3, and cell 4) for the first hop. If determining that cell 2 satisfies the handover trigger condition, the terminal is handed over to cell 2, where a network device corresponding to cell 2 is the network device #3.

S1070: The network device #2 sends, to the network device #3, the prediction result reported by the terminal in S 1040. Correspondingly, the network device #3 receives the prediction result.

This step may be performed before or after the terminal determines to be handed over from the network device #2 to the network device #3. For example, after receiving the prediction result, the network device #2 may send the prediction result to network devices corresponding to all candidate target cells, or may send the prediction result to a network device corresponding to a candidate target cell corresponding to a next hop.

S1080: The network device #3 sends third configuration information to the terminal based on the prediction result of the terminal. Correspondingly, the terminal receives the third configuration information from the network device #2.

The third configuration information may include a handover trigger condition for a next hop, or may be a conventional handover configuration, for example, configurations of a neighboring cell that needs to be measured and a reporting event.

S 1090: The terminal is handed over from the network device #3 to a network device #4 based on the third configuration information.

For details, refer to the example in S1060. After being handed over to cell 2, the terminal may measure cell 5 and cell 6. If determining that cell 5 satisfies the handover trigger condition, the terminal is handed over to cell 5, where a network device corresponding to cell 5 is the network device #4.

It should be understood that subsequent cell handovers may be performed with reference to S1070 to S1090. Details are not described in this specification again. It should also be understood that one or more steps in S 1060 to S1090 are performed only when some conditions are satisfied. In practice, one or more steps are not necessarily performed depending on an actual network status.

According to the cell handover method provided in this application, a consecutive-handover prediction capability can be implemented on the terminal side. In this way, even if a network side has no consecutive-handover prediction capability, a consecutive-handover prediction function within a time period can be implemented. In addition, the prediction result is reported by using the auxiliary information, so that the network side can be assisted in determining the cell sequence for handovers that is more appropriate for the terminal, and performing cell handover related configuration.

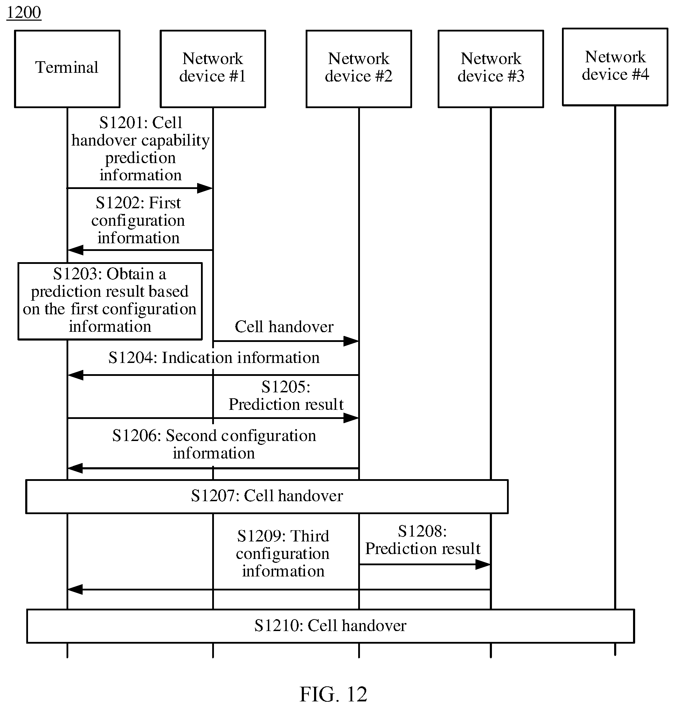

FIG. 12 is a schematic flowchart of predicting a cell sequence for handovers and performing a cell handover by applying the method shown in FIG. 9. For terms, concepts, or the like in the method 1200 that are the same as those in FIG. 9, refer to descriptions of the corresponding terms and concepts in the method 900.

S1201: A terminal sends cell handover prediction capability information of the terminal to a network device #1. Correspondingly, the network device #1 receives the cell handover prediction capability information.

This step is the same as S910. For details, refer to S910.

S1202: The network device #1 sends first configuration information to the terminal based on the cell handover prediction capability information reported by the terminal.

For this step, refer to S920.

In an example, the first configuration information may include the following content:

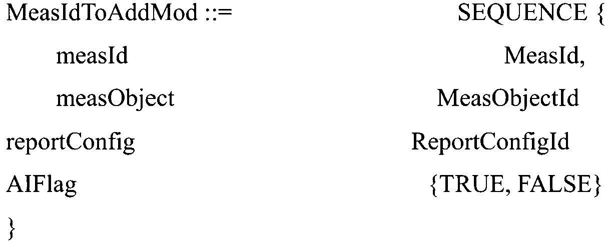

measId represents a measurement ID. measObject is a measurement object configuration. reportConfig is a reporting configuration. AIFlag represents that the current measurement object configuration may be used for AI handover prediction on a terminal side, that is, the terminal may perform AI handover prediction based on measurement results of measurement objects in the configuration, or report a reporting manner of an AI prediction result configuration to the network device, so that the network device knows that the reporting is AI prediction-based reporting.

In an example, the first configuration information may further include the reporting configuration. A difference from S1020 lies in that the reporting configuration herein is an aperiodic reporting configuration, and the terminal may include a prediction result in an aperiodic report.

For example, the reporting configuration may include a reported carried message. For example, the prediction result may be carried and reported by using RRC signaling, MAC-CE signaling, or UCI.

Further, if the prediction result is carried in UCI, the UCI may be similar to an aperiodic report at a physical layer, for example, aperiodic CSI reporting. Further, the network device #1 may configure a UCI payload size, a time-frequency domain position for resource mapping, and the like. If the prediction result is carried in RRC signaling, the prediction result may be carried in a UEInformationRequest message for reporting.

The reporting configuration may further include a field and a format that are corresponding to reported information, for example, the field example in FIG. 11.

Optionally, the network device #1 may further configure, based on a value of X reported by the terminal, duration for which the terminal responds to trigger reporting. For example, the terminal performs reporting after Y time units following receiving of trigger signaling. In addition to a configuration manner, Y may also be predefined in a protocol. For meanings of X and Y, refer to Table 1.

Optionally, the first configuration information may further indicate expiration time/an invalidation condition of a prediction function.

Expiration time: For example, after receiving the first configuration information, the terminal starts an expiration timer. After the expiration timer expires, it is considered that the terminal cannot provide a related prediction capability, and the terminal may no longer perform related prediction within a time period.

Invalidation condition: For example, if signal quality measured by the terminal is lower than a specific threshold, or a speed of the terminal is higher than a specific threshold, it is considered that the terminal currently cannot provide a related prediction capability, and the terminal may no longer perform related prediction within a time period.

S1203: The terminal obtains the prediction result based on the first configuration information.

For this step, refer to S930.

S 1204: A network device #2 sends indication information to the terminal. The indication information indicates the terminal to report the prediction result.

An execution sequence of S1203 and S1204 is not limited in this application. In an example, after receiving the first configuration information, the terminal may predict a cell sequence for handovers, does not actively report the prediction result after obtaining the prediction result, and reports the prediction result only after receiving the indication information in S1204. In another example, the terminal predicts a cell sequence for handovers based on the first configuration information only after receiving the indication information, and reports the prediction result to the network device #2 after obtaining the prediction result.

In an example, if the terminal does not obtain the prediction result when receiving the indication information or within a time period in which the terminal receives the indication information, the terminal may further indicate to the network device #2 that the terminal has no prediction result or cannot generate the prediction result.

For example, the indication information may be RRC, a MAC-CE, downlink control information (downlink control information, DCI), or the like. Further, the indication information may be carried in a UEInformationResponse message.

For example, the terminal may report the prediction result after X or Y time units.

S1205: The terminal sends the prediction result to the network device #2. Correspondingly, the network device #2 receives the prediction result.

For the prediction result, refer to the description in S940. Details are not described herein again.

S 1206 to S1210 describe cell handovers and a handover trigger condition configuration on a network device side. For details, refer to S1050 to S1090. Details are not described herein again. It should also be understood that one or more steps in S1207 to S1210 are performed only when some conditions are satisfied. In practice, one or more steps are not necessarily performed depending on an actual network status.

According to the cell handover method provided in this application, a consecutive-handover prediction capability can be implemented on the terminal side. In this way, even if a network side has no consecutive-handover prediction capability, a consecutive-handover prediction function within a time period can be implemented. In addition, the prediction result is dynamically reported in a manner of triggering by the network side, so that the network side can obtain the prediction result of the terminal side as required. Further, in this solution, the terminal is allowed to notify the network side that the terminal has no prediction result or cannot generate the prediction result, so that the network side enables a cell handover in another manner in time.

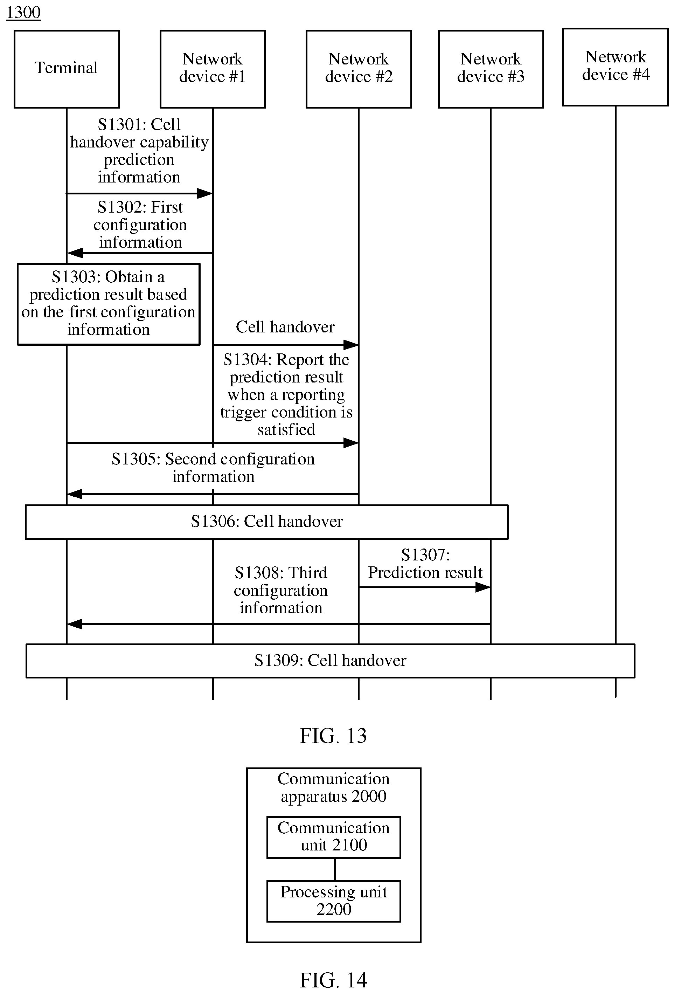

FIG. 13 is a schematic flowchart of predicting a cell sequence for handovers and performing a cell handover by applying the method shown in FIG. 9. For terms, concepts, or the like in the method 1300 that are the same as those in FIG. 9, refer to descriptions of the corresponding terms and concepts in the method 900.

S1301: A terminal sends cell handover prediction capability information of the terminal to a network device #1. Correspondingly, the network device #1 receives the cell handover prediction capability information.

This step is the same as S910. For details, refer to S910.

S1302: The network device #1 sends first configuration information to the terminal based on the cell handover prediction capability information reported by the terminal.

For this step, refer to S920.

In an example, the first configuration information may include a reporting trigger condition, and the terminal reports a prediction result when the reporting trigger condition is satisfied.

In an example, the first configuration information may further include a field and a format of reported information, for example, the field example in FIG. 11.

In an example, the first configuration information may include the following content:

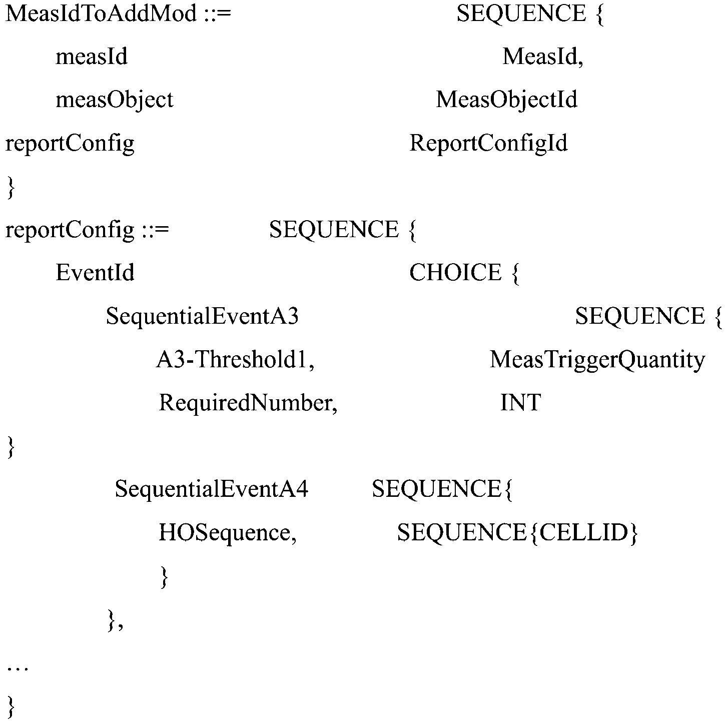

measId represents a measurement ID. measObject is a measurement object configuration. reportConfig is a reporting configuration. AIFlag represents that the current measurement object configuration may be used for AI handover prediction on a terminal side, that is, the terminal may perform AI handover prediction based on measurement results of measurement objects in the configuration, or report a reporting manner of an AI prediction result configuration to the network device, so that the network device knows that the reporting is AI prediction-based reporting. The reporting configuration is corresponding to an event that triggers the terminal to report the prediction result. For example, SequentialEventA3 is that the terminal determines, based on signal thresholds of historically measured cells or handover cells, whether reporting can be triggered. For example, when signal quality of the historically measured cells is higher than A3-Threshold1, reporting can be performed, where MeasTriggerQuantity is a signal quality type and threshold. For another example, when signal quality of a serving cell on which a handover has historically been performed is higher than A3-Threshold1, reporting can be triggered. Optionally, a statistical threshold RequiredNumber may be further added, that is, reporting can be triggered when a specific quantity of handovers are performed or a specific quantity of measurement results are higher than a threshold. For example, SequentialEventA4 is that the terminal determines, based on whether a handover sequence of the historically measured cells satisfies a condition, whether to trigger reporting. For example, HOSequence is a configured handover sequence requirement. For example, for cells in the measurement objects, the configured handover sequence requirement is {cell 1, cell 2, cell 3}. When a historical handover sequence satisfies the condition, reporting can be triggered. Optionally, each hop corresponding to a handover may involve more than one cell, for example, {[cell 1, cell 4], cell 2, cell 3}. In this case, any one of cell 1 or cell 4 may be referred to as a serving cell on which a handover has been performed, provided that signal quality of one of cell 1 or cell 4 is higher than A3-Threshold1.

Optionally, the first configuration information may further indicate expiration time/an invalidation condition of a prediction function.

Expiration time: For example, after receiving the first configuration information, the terminal starts an expiration timer. After the expiration timer expires, it is considered that the terminal cannot provide a related prediction capability, and the terminal may no longer perform related prediction within a time period.

Invalidation condition: For example, if signal quality measured by the terminal is lower than a specific threshold, or a speed of the terminal is higher than a specific threshold, it is considered that the terminal currently cannot provide a related prediction capability, and the terminal may no longer perform related prediction within a time period.

S1303: The terminal obtains the prediction result based on the first configuration information.

For this step, refer to S930.

S1304: The terminal sends the prediction result to a network device #2. Correspondingly, the network device #2 receives the prediction result.

The terminal may send the prediction result to the network device #2 when the reporting trigger condition is satisfied. For example, the prediction result may be an RRM measurement report, which carries content (for example, the content in FIG. 11) such as a satisfaction event and a handover sequence. For example, the prediction result is not limited to an RRM measurement report of RRC, and may be alternatively an RRM measurement report of a MAC-CE, UCI, or the like.

For the prediction result, refer to the description in S940. Details are not described herein again.

S1305 to S1309 describe cell handovers and a handover trigger condition configuration on a network device side. For details, refer to S1050 to S1090. Details are not described herein again.

It should be understood that subsequent cell handovers may be performed with reference to S1070 to S1090. Details are not described in this specification again. It should also be understood that one or more steps in S1306 to S1309 are performed only when some conditions are satisfied. In practice, one or more steps are not necessarily performed depending on an actual network status.

According to the cell handover method provided in this application, a consecutive-handover prediction capability can be implemented on the terminal side. In this way, even if a network side has no consecutive-handover prediction capability, a consecutive-handover prediction function within a time period can be implemented. In addition, the prediction result is reported in an event triggering manner, so that the terminal can dynamically report the measurement result when the terminal satisfies a corresponding condition. In this way, the reporting result obtained by the network side better meets expectations and requirements.

It should be noted that the monitoring cell in the method 400, the method 600, and the method 800 can also be applied to the method 900, the method 1000, the method 1200, and the method 1300. For content related to the monitoring cell, refer to the method 400, the method 600, and the method 800. Details are not described herein again. In the method 900, the method 1000, the method 1200, and the method 1300, the monitoring cell may be configured by the network side, or may be determined by the terminal side.

The foregoing describes the method embodiments provided in this application, and the following describes apparatus embodiments provided in this application. It should be understood that descriptions of the apparatus embodiments are corresponding to the descriptions of the method embodiments. Therefore, for content that is not described in detail, refer to the foregoing method embodiments. For brevity, details are not described herein again.

FIG. 14 is a block diagram of a communication apparatus according to an embodiment of this application. As shown in FIG. 14, the communication apparatus 2000 may include a communication unit 2100 and a processing unit 2200. The communication unit 2100 may implement a corresponding communication function. The communication may be internal communication of the communication apparatus 2000, or may be communication between the communication apparatus 2000 and another apparatus. The processing unit 2200 may implement a corresponding processing function. The communication unit 2100 may also be referred to as a communication interface or a transceiver unit. Optionally, the communication apparatus 2000 may further include a storage unit. The storage unit may be configured to store instructions and/or data, and the processing unit 2200 may read the instructions and/or the data in the storage unit, so that the apparatus implements the foregoing method embodiments.

In a possible design, the communication apparatus 2000 may be the network device in the method 400 or the method 600, or may be a module or a chip used in the network device. The communication apparatus 2000 may be configured to perform the steps or procedures performed by the network device in the method 400 or the method 600.

Specifically, the processing unit 2200 is configured to generate first configuration information, and the communication unit 2100 is configured to send the first configuration information. The first configuration information indicates at least one cell sequence and a deactivation trigger condition of the at least one cell sequence, the cell sequence includes at least one candidate target cell, the at least one candidate target cell is a target cell to which a terminal may be sequentially handed over in a first time period, and the cell sequence becomes invalid when the deactivation trigger condition corresponding to the cell sequence is satisfied.

Optionally, the first configuration information further indicates a monitoring cell associated with the candidate target cell and a corresponding monitoring reporting condition, the monitoring cell is used to determine whether the corresponding candidate target cell is applicable, and the monitoring cell is different from the corresponding candidate target cell.

Optionally, the communication unit 2100 is further configured to receive first reporting information, where the first reporting information indicates that a monitoring result of the monitoring cell satisfies the monitoring reporting condition.

Optionally, the monitoring reporting condition is: Signal quality of the monitoring cell is greater than a first threshold, and signal quality of the candidate target cell corresponding to the monitoring cell is less than a second threshold, where the first threshold is greater than the second threshold.

Optionally, the deactivation trigger condition is: The signal quality of all the candidate target cells is less than a third threshold or an average signal quality value of the candidate target cells is less than a fourth threshold.

Optionally, the communication unit 2100 is further configured to receive second reporting information, where the second reporting information indicates that the terminal satisfies the deactivation trigger condition.

Optionally, the first configuration information further indicates one or more of the following: a handover trigger condition, a usage condition associated with the at least one cell sequence, an effective time of the first configuration information, or a measurement parameter needed to measure the candidate target cell, and the handover trigger condition is used to determine whether to perform a cell handover.

In a possible design, the communication apparatus 2000 may be the terminal in the method 400 or the method 600, or may be a module or a chip used in the terminal. The communication apparatus 2000 may be configured to perform the steps or procedures performed by the terminal in the method 400 or the method 600.

Specifically, the communication unit 2100 is configured to receive first configuration information, and the processing unit 2200 is configured to perform a cell handover based on the first configuration information. The first configuration information indicates at least one cell sequence and a deactivation trigger condition of the at least one cell sequence, the cell sequence includes at least one candidate target cell, the at least one candidate target cell is a target cell to which the communication apparatus 2000 may be sequentially handed over in a first time period, and the cell sequence becomes invalid when the deactivation trigger condition corresponding to the cell sequence is satisfied.

Optionally, the first configuration information further indicates a monitoring cell associated with the candidate target cell and a corresponding monitoring reporting condition, the monitoring cell is used to determine whether the corresponding candidate target cell is applicable, and the monitoring cell is different from the corresponding candidate target cell.

Optionally, the communication unit 2100 is further configured to send first reporting information when a monitoring result of the monitoring cell satisfies the monitoring reporting condition, where the first reporting information indicates that the monitoring result of the monitoring cell satisfies the monitoring reporting condition.

Optionally, the monitoring reporting condition is: Signal quality of the monitoring cell is greater than a first threshold, and signal quality of the candidate target cell corresponding to the monitoring cell is less than a second threshold, where the first threshold is greater than the second threshold.

Optionally, the deactivation trigger condition is: The signal quality of all the candidate target cells is less than a third threshold or an average signal quality value of the candidate target cells is less than a fourth threshold.

Optionally, the communication unit 2100 is further configured to send second reporting information when the deactivation trigger condition is satisfied, where the second reporting information indicates that the communication apparatus 2000 satisfies the deactivation trigger condition.

Optionally, the first configuration information further indicates one or more of the following: a handover trigger condition, a usage condition associated with the at least one cell sequence, an effective time of the first configuration information, or a measurement parameter needed to measure the candidate target cell, and the handover trigger condition is used to determine whether to perform a cell handover.

In a possible design, the communication apparatus 2000 may be the network device in the method 800, the method 900, the method 1000, the method 1200, or the method 1300, or may be a module or a chip used in the network device. The communication apparatus 2000 may be configured to perform the steps or procedures performed by the network device in the method 800, the method 900, the method 1000, the method 1200, or the method 1300.

Specifically, the communication unit 2100 is configured to send first configuration information and receive a prediction result. The first configuration information is determined based on cell handover prediction capability information of a terminal, the first configuration information includes a measurement object configuration, and the first configuration information is used by the terminal to predict a target cell to which the terminal may be sequentially handed over in a first time period. The prediction result is determined based on the first configuration information, the prediction result indicates at least one first cell sequence, the first cell sequence includes at least one first candidate target cell, and the at least one first candidate target cell is a target cell that is predicted by the terminal and to which the terminal may be sequentially handed over in the first time period.

Optionally, the communication unit 2100 is further configured to send second configuration information, where the second configuration information indicates at least one second cell sequence, the second cell sequence includes at least one second candidate target cell, the at least one second candidate target cell is a target cell to which the terminal may be sequentially handed over in the first time period, and the second configuration information is determined based on the prediction result.

Optionally, the communication unit 2100 is further configured to receive the cell handover prediction capability information.

Optionally, the cell handover prediction capability information includes one or more of the following: a quantity of consecutive handovers capable of being predicted by the terminal, a cell parameter capable of being predicted by the terminal, validity duration capable of being predicted by the terminal, a quantity of cells needed for measurement by the terminal, a cell parameter needed for measurement by the terminal, duration needed for measurement by the terminal, or a reference signal configuration needed for measurement by the terminal.

Optionally, the communication unit 2100 is specifically configured to receive auxiliary information, where the auxiliary information includes the prediction result.

Optionally, the communication unit 2100 is further configured to send indication information, where the indication information is used to trigger the terminal to report the prediction result.

Optionally, the first configuration information includes a reporting trigger condition, and the terminal reports the prediction result when the reporting trigger condition is satisfied.

Optionally, the prediction result further includes one or more of the following: information about a cell in the first cell sequence, a probability of correctly predicting a cell in the first cell sequence, a handover time point for each hop in the first cell sequence, or predicted validity duration of the first cell sequence.

In a possible design, the communication apparatus 2000 may be the terminal in the method 800, the method 900, the method 1000, the method 1200, or the method 1300, or may be a module or a chip used in the terminal. The communication apparatus 2000 may be configured to perform the steps or procedures performed by the terminal in the method 800, the method 900, the method 1000, the method 1200, or the method 1300.

Specifically, the communication unit 2100 is configured to receive first configuration information, where the first configuration information is determined based on cell handover prediction capability information of the terminal, and the first configuration information includes a measurement object configuration. The processing unit 2200 is configured to determine at least one first cell sequence based on the first configuration information, where the first cell sequence includes at least one candidate target cell, and the at least one candidate target cell is a predicted target cell to which the terminal may be sequentially handed over in a first time period. The communication unit 2100 is further configured to send a prediction result, where the prediction result indicates the at least one first cell sequence.

Optionally, the communication unit 2100 is further configured to send the cell handover prediction capability information.

Optionally, the cell handover prediction capability information includes one or more of the following: a quantity of consecutive handovers capable of being predicted by the communication apparatus 2000, a cell parameter capable of being predicted by the communication apparatus 2000, validity duration capable of being predicted by the communication apparatus 2000, a quantity of cells needed for measurement by the communication apparatus 2000, a cell parameter needed for measurement by the communication apparatus 2000, duration needed for measurement by the communication apparatus 2000, or a reference signal configuration needed for measurement by the communication apparatus 2000.

Optionally, a manner of sending the prediction result includes any one of the following: sending in a manner of reporting auxiliary information, sending based on indication information of a network device, or sending after a reporting trigger condition configured by a network device is satisfied.

Optionally, the prediction result further includes one or more of the following: information about a cell in the first cell sequence, a probability of correctly predicting a cell in the first cell sequence, a handover time point for each hop in the first cell sequence, or predicted validity duration of the first cell sequence.

For details of the steps or procedures performed by the units in the communication apparatus 2000, refer to the descriptions in the foregoing methods. Details are not described herein again.

It should be understood that the "unit" in the communication apparatus 2000 may be implemented by using hardware, may be implemented by using software, or may be implemented by hardware executing corresponding software. For example, the "unit" may be an application-specific integrated circuit (application-specific integrated circuit, ASIC), an electronic circuit, a processor configured to execute one or more software or firmware programs (for example, a shared processor, a dedicated processor, or a packet processor), a memory, a combinational logic circuit, and/or another appropriate component supporting the described functions. For another example, the communication unit 2100 may be replaced with a transceiver or a transceiver circuit (which may include, for example, a receiver circuit and a transmitter circuit), and the processing unit 2200 may be replaced with a processor or a processing circuit.

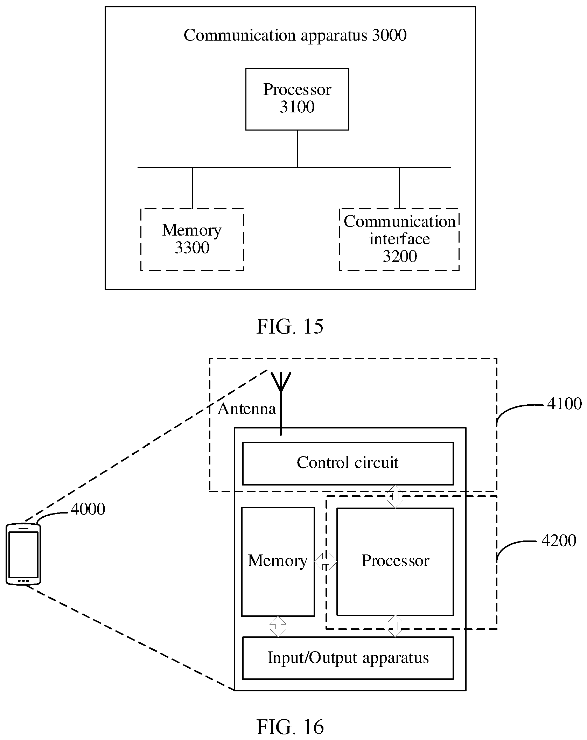

FIG. 15 is a block diagram of another communication apparatus 3000 according to an embodiment of this application. The apparatus 3000 may be a network device or a terminal, or may be a chip, a chip system, a processor, or the like that supports the network device or the terminal in implementing the foregoing methods. The apparatus may be configured to implement the methods described in the foregoing method embodiments. For details, refer to the descriptions in the foregoing method embodiments.

The apparatus 3000 may include one or more processors 3100. The processor 3100 may also be referred to as a processing unit, and may implement a specific control function. The processor 3100 may be a general-purpose processor, a dedicated processor, or the like. For example, the processor 3100 may be a baseband processor or a central processing unit. The baseband processor may be configured to process a communication protocol and communication data. The central processing unit may be configured to: control the communication apparatus (for example, a base station, a baseband chip, a user chip, a DU, or a CU), execute a software program, and process data of the software program.

In an optional design, the processor 3100 may also store instructions and/or data, and the instructions and/or the data may be run by the processor 3100, so that the apparatus 3000 performs the methods described in the foregoing method embodiments.

In another optional design, the apparatus 3000 may include a communication interface 3200 configured to implement a receiving function and a sending function. For example, the communication interface 3200 may be a transceiver circuit, an interface, an interface circuit, a transceiver, or the like. The transceiver circuit, the interface, the interface circuit, or the transceiver configured to implement the receiving function and the sending function may be separated, or may be integrated together. The transceiver circuit, the interface, the interface circuit, or the transceiver may be configured to read/write code/data, or the transceiver circuit, the interface, the interface circuit, or the transceiver may be configured to transmit or transfer a signal.

Optionally, the apparatus 3000 may include one or more memories 3300 that may store instructions. The instructions may be run on the processor 3100, so that the apparatus 3000 performs the methods described in the foregoing method embodiments. Optionally, the memory 3300 may further store data. Optionally, the processor 3100 may also store instructions and/or data. The processor 3100 and the memory 3300 may be disposed separately, or may be integrated together.

FIG. 16 is a diagram of a structure of a terminal 4000 according to this application. The communication apparatus 2000 or the communication apparatus 3000 may be configured in the terminal 4000. Alternatively, the communication apparatus 2000 or the communication apparatus 3000 may be the terminal 4000. In other words, the terminal 4000 may perform the actions performed by the terminal in the foregoing method embodiments. Optionally, for ease of description, FIG. 16 shows only main components of the terminal.

In an implementation, the terminal 4000 is configured to: receive first configuration information; and perform a cell handover based on the first configuration information. The first configuration information indicates at least one cell sequence and a deactivation trigger condition of the at least one cell sequence, the cell sequence includes at least one candidate target cell, the at least one candidate target cell is a target cell to which the terminal may be sequentially handed over in a first time period, and the cell sequence becomes invalid when the deactivation trigger condition corresponding to the cell sequence is satisfied.

In another implementation, the terminal 4000 is configured to: receive first configuration information, where the first configuration information is determined based on cell handover prediction capability information of the terminal, and the first configuration information includes a measurement object configuration; determine at least one first cell sequence based on the first configuration information, where the first cell sequence includes at least one candidate target cell, and the at least one candidate target cell is a predicted target cell to which the terminal may be sequentially handed over in a first time period; and send a prediction result, where the prediction result indicates the at least one first cell sequence.

As shown in FIG. 16, the terminal 4000 includes a processor, a memory, a control circuit, an antenna, and an input/output apparatus.

The processor is mainly configured to: process a communication protocol and communication data, control the entire terminal, execute a software program, and process data of the software program, for example, is configured to support the terminal in performing the actions described in the foregoing method embodiments. The memory is mainly configured to store the software program and data. The control circuit is mainly configured to perform conversion between a baseband signal and a radio frequency signal and process a radio frequency signal. The control circuit and the antenna together may also be referred to as a transceiver, and are mainly configured to receive and send radio frequency signals in the form of electromagnetic waves. The input/output apparatus, like a touchscreen, a display, or a keyboard, is mainly configured to receive data input by a user and output data to the user.

After the terminal is powered on, the processor may read the software program from the memory 1830, interpret and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends out a radio frequency signal in the form of electromagnetic waves through the antenna. When data is sent to the terminal, the radio frequency circuit receives a radio frequency signal through the antenna, converts the radio frequency signal into a baseband signal, and outputs the baseband signal to the processor. The processor converts the baseband signal into data and processes the data.

A person skilled in the art can understand that, for ease of description, FIG. 16 shows only one memory and one processor. An actual terminal may include a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal, execute the software program, and process the data of the software program. Functions of the baseband processor and the central processing unit are integrated into the processor in FIG. 16. A person skilled in the art can understand that the baseband processor and the central processing unit each may be an independent processor, and are interconnected by using a bus or other technologies. A person skilled in the art can understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have sending and receiving functions may be considered as a transceiver unit 4100 of the terminal 4000, and the processor that has a processing function may be considered as a processing unit 4200 of the terminal 4000. As shown in FIG. 16, the terminal 4000 includes the transceiver unit 4100 and the processing unit 4200. The transceiver unit may also be referred to as a transceiver, a transceiver device, a transceiver apparatus, or the like. Optionally, a component configured to implement the receiving function in the transceiver unit 4100 may be considered as a receiving unit, and a component configured to implement the sending function in the transceiver unit 4100 may be considered as a sending unit. In other words, the transceiver unit 4100 includes the receiving unit and the sending unit. For example, the receiving unit may also be referred to as a receiver, a receiving device, a receiving circuit, or the like, and the sending unit may also be referred to as a transmitter, a transmitting device, a transmitting circuit, or the like.

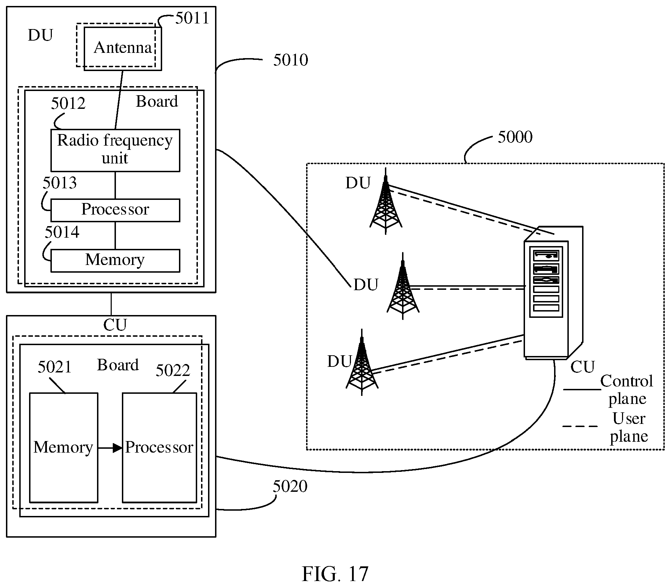

FIG. 17 is a diagram of a structure of a network device 5000 according to an embodiment of this application. The communication apparatus 2000 or the communication apparatus 3000 may be configured in the network device 5000. Alternatively, the communication apparatus 2000 or the communication apparatus 3000 may be the network device 5000. In other words, the network device 5000 may perform the actions performed by the network device in the foregoing method embodiments.

In an implementation, the network device 5000 is configured to: generate first configuration information, and send the first configuration information. The first configuration information indicates at least one cell sequence and a deactivation trigger condition of the at least one cell sequence, the cell sequence includes at least one candidate target cell, the at least one candidate target cell is a target cell to which a terminal may be sequentially handed over in a first time period, and the cell sequence becomes invalid when the deactivation trigger condition corresponding to the cell sequence is satisfied.

In another implementation, the network device 5000 is configured to: send first configuration information, and receive a prediction result. The first configuration information is determined based on cell handover prediction capability information of a terminal, the first configuration information includes a measurement object configuration, and the first configuration information is used by the terminal to predict a target cell to which the terminal may be sequentially handed over in a first time period. The prediction result is determined based on the first configuration information, the prediction result indicates at least one first cell sequence, the first cell sequence includes at least one first candidate target cell, and the at least one first candidate target cell is a target cell that is predicted by the terminal and to which the terminal may be sequentially handed over in the first time period.

As shown in FIG. 17, the network device 5000 may include one or more DUs 5010 and one or more CUs 5020. The CU 5020 may communicate with an NG core (next-generation core network, NC). The DU 5010 may include at least one antenna 5011, at least one radio frequency unit 5012, at least one processor 5013, and at least one memory 5014. The DU 5010 is mainly configured to: receive/send a radio frequency signal, perform conversion between a radio frequency signal and a baseband signal, and perform partial baseband processing. The CU 5020 may include at least one processor 5022 and at least one memory 5021. The CU 5020 and the DU 5010 may communicate with each other through an interface. A control plane (control plane, CP) interface may be Fs-C, for example, F1-C, and a user plane (user plane, UP) interface may be Fs-U, for example, F1-U.

The CU 5020 is mainly configured to: perform baseband processing, control the network device 5000, and the like. The DU 5010 and the CU 5020 may be physically disposed together; or may be physically disposed separately, namely, in a distributed base station. The CU 5020 is a control center of the network device 5000, may also be referred to as a processing unit, and is mainly configured to complete a baseband processing function. For example, the CU 5020 may be configured to control the network device 5000 to perform an operation procedure related to the network device #1 or the network device #2 in the foregoing method embodiments.

Specifically, baseband processing performed by the CU and the DU may be divided based on protocol layers of a wireless network. For example, functions of a PDCP layer and protocol layers above the PDCP layer are set on the CU, and functions of protocol layers below PDCP, such as an RLC layer and a MAC layer, are set on the DU. For another example, the CU implements functions of an RRC layer and a PDCP layer, and the DU implements functions of an RLC layer, a MAC layer, and a PHY layer.

In addition, optionally, the network device 5000 may include one or more radio units (RUs), one or more DUs, and one or more CUs. The DU may include at least one processor 5013 and at least one memory 5014, the RU may include at least one antenna 5011 and at least one radio frequency unit 5012, and the CU may include at least one processor 5022 and at least one memory 5021.

In an example, the CU 5020 may include one or more boards. A plurality of boards can jointly support a radio access network (for example, a 5G network) of a single access standard, or can separately support radio access networks (for example, an LTE network, a 5G network, or another network) of different access standards. The memory 5021 and the processor 5022 may serve one or more boards. In other words, a memory and a processor may be disposed on each board. Alternatively, a same memory and processor may be shared by a plurality of boards. In addition, a necessary circuit may be further disposed on each board. The DU 5010 may include one or more boards. A plurality of boards can jointly support a radio access network (for example, a 5G network) of a single access standard, or can separately support radio access networks (for example, an LTE network, a 5G network, or another network) of different access standards. The memory 5014 and the processor 5013 may serve one or more boards. In other words, a memory and a processor may be disposed on each board. Alternatively, a same memory and processor may be shared by a plurality of boards. In addition, a necessary circuit may be further disposed on each board.

It should be understood that the network device 5000 shown in FIG. 17 can implement processes related to the actions performed by the first communication apparatus in the foregoing method embodiments. Operations and/or functions of various modules in the network device 5000 are used to implement corresponding procedures in the foregoing method embodiments. For details, refer to the descriptions in the foregoing method embodiments. To avoid repetition, detailed descriptions are omitted properly herein.

It should be understood that the network device 5000 shown in FIG. 17 is merely a possible architecture of the network device, and should not constitute any limitation on this application. The methods provided in this application are applicable to a network device in another architecture, for example, a network device including a CU, a DU, and an AAU. A specific architecture of the network device is not limited in this application.

It should be understood that, in a possible design, steps in the method embodiments provided in this application may be implemented by using an integrated logic circuit of hardware in a processor, or by using instructions in a form of software. The steps of the methods disclosed with reference to embodiments of this application may be directly implemented by a hardware processor, or may be implemented by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information from the memory and completes the steps in the foregoing methods in combination with the hardware in the processor. To avoid repetition, details are not described herein again.

It should be noted that the processor in embodiments of this application may be an integrated circuit chip, and has a signal processing capability. In an implementation process, steps in the foregoing method embodiments may be implemented by using an integrated logic circuit of hardware in the processor, or by using instructions in a form of software. The processor may be a general-purpose processor, a digital signal processor (DSP), an application-specific integrated circuit (ASIC), a field programmable gate array (FPGA), another programmable logic device, a discrete gate, a transistor logic device, or a discrete hardware component. The processor can implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information from the memory and completes the steps in the foregoing methods in combination with the hardware in the processor.

It can be understood that the memory in embodiment of this application may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example rather than limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the methods that are described in this specification is intended to include but is not limited to these memories and any other appropriate types of memories.

This application further provides a computer program product. The computer program product includes computer program code. When the computer program code is run on a computer, the computer is enabled to perform the steps or procedures performed by the network device or the terminal in any one of the foregoing method embodiments.

This application further provides a computer-readable storage medium. The computer-readable storage medium stores program code. When the program code is run on a computer, the computer is enabled to perform the steps or procedures performed by the network device or the terminal in any one of the foregoing method embodiments.

This application further provides a communication apparatus, including a processor and an interface. The interface is configured to send and/or receive a signal, so that the processor performs the steps or procedures performed by the network device or the terminal in any one of the foregoing method embodiments.

This application further provides a communication system, including at least one of a network device and a terminal.

The foregoing apparatus embodiments are in full correspondence with the method embodiments, and corresponding modules or units perform corresponding steps. For example, the communication unit or the communication interface performs receiving or sending steps in the method embodiments, and the processing unit or the processor may perform steps other than the sending and receiving steps.

In embodiments of this application, the terms and English abbreviations are all examples given for ease of description, and should not constitute any limitation on this application. This application does not exclude a possibility of defining other terms that can implement same or similar functions in existing or future protocols.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, a thread of execution, a program, and/or a computer. As shown in figures, both a compute device and an application that runs on the compute device may be components. One or more components may reside within a process and/or a thread of execution, and a component may be located on one computer and/or distributed between two or more computers. In addition, these components may be executed from various computer-readable storage media that store various data structures. For example, the components may perform communication by using a local and/or remote process and based on a signal having one or more data packets (for example, data from two components interacting with another component in a local system, a distributed system, and/or across a network like an internet interacting with other systems by using the signal).

A person of ordinary skill in the art can be aware that, illustrative logical blocks (illustrative logical blocks) and steps (steps) described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It can be clearly understood by a person skilled in the art that, for the purpose of convenient and brief description, for detailed working processes of the system, apparatuses, and units described above, refer to the corresponding processes in the foregoing method embodiments. Details are not described herein again.

In the several embodiments provided in this application, it should be understood that the disclosed system, apparatuses, and methods may be implemented in other manners. For example, the described apparatus embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may or may not be physically separate, and parts displayed as units may or may not be physical units. To be specific, the parts may be located in one position or may be distributed on a plurality of network units. Some or all of the units may be selected depending on an actual requirement to achieve the objectives of the solutions of embodiments.

In addition, functional units in embodiments of this application may be integrated into one processing unit, each of the units may exist alone physically, or at least 2 may be integrated into one unit.

In the foregoing embodiments, all or some of the functions of the functional units may be implemented by using software, hardware, firmware, or any combination thereof. When software is used to implement the functions, all or some of the functions may be implemented in a form of a computer program product. The computer program product includes one or more computer instructions (programs). When the computer program instructions (programs) are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell handover method, applied to a network device, wherein the method comprises:
generating first configuration information; and
sending the first configuration information; wherein
the first configuration information indicates at least one cell sequence and a deactivation trigger condition of the at least one cell sequence, the cell sequence comprises at least one candidate target cell, the at least one candidate target cell is a target cell to which a terminal is sequentially handed over in a first time period, and the cell sequence becomes invalid when the deactivation trigger condition corresponding to the cell sequence is satisfied.

2. The method according to claim 1, wherein the first configuration information further indicates a monitoring cell associated with the candidate target cell and a corresponding monitoring reporting condition, the monitoring cell is used to determine whether the corresponding candidate target cell is applicable, and the monitoring cell is different from the corresponding candidate target cell.

3. The method according to claim 2, wherein the method further comprises:
receiving first reporting information, wherein the first reporting information indicates that a monitoring result of the monitoring cell satisfies the monitoring reporting condition.

4. The method according to claim 2 or 3, wherein the monitoring reporting condition is: signal quality of the monitoring cell is greater than a first threshold, and signal quality of the candidate target cell corresponding to the monitoring cell is less than a second threshold, wherein the first threshold is greater than the second threshold.

5. The method according to any one of claims 1 to 4, wherein the deactivation trigger condition is: the signal quality of all the candidate target cells is less than a third threshold or an average signal quality value of the candidate target cells is less than a fourth threshold.

6. The method according to any one of claims 1 to 5, wherein the method further comprises:
receiving second reporting information, wherein the second reporting information indicates that the terminal satisfies the deactivation trigger condition.

7. The method according to any one of claims 1 to 6, wherein the first configuration information further indicates one or more of the following: a handover trigger condition, a usage condition associated with the at least one cell sequence, an effective time of the first configuration information, or a measurement parameter needed to measure the candidate target cell, and the handover trigger condition is used to determine whether to perform a cell handover.

8. A cell handover method, applied to a terminal, wherein the method comprises:
receiving first configuration information, wherein the first configuration information indicates at least one cell sequence and a deactivation trigger condition of the at least one cell sequence, the cell sequence comprises at least one candidate target cell, the at least one candidate target cell is a target cell to which the terminal is sequentially handed over in a first time period, and the cell sequence becomes invalid when the deactivation trigger condition corresponding to the cell sequence is satisfied; and
performing a cell handover based on the first configuration information.

9. The method according to claim 8, wherein the first configuration information further indicates a monitoring cell associated with the candidate target cell and a corresponding monitoring reporting condition, the monitoring cell is used to determine whether the corresponding candidate target cell is applicable, and the monitoring cell is different from the corresponding candidate target cell.

10. The method according to claim 9, wherein the method further comprises:
sending first reporting information when a monitoring result of the monitoring cell satisfies the monitoring reporting condition, wherein the first reporting information indicates that the monitoring result of the monitoring cell satisfies the monitoring reporting condition.

11. The method according to claim 9 or 10, wherein the monitoring reporting condition is: signal quality of the monitoring cell is greater than a first threshold, and signal quality of the candidate target cell corresponding to the monitoring cell is less than a second threshold, wherein the first threshold is greater than the second threshold.

12. The method according to any one of claims 8 to 11, wherein the deactivation trigger condition is: the signal quality of all the candidate target cells is less than a third threshold or an average signal quality value of the candidate target cells is less than a fourth threshold.

13. The method according to any one of claims 8 to 12, wherein the method further comprises:
sending second reporting information when the deactivation trigger condition is satisfied, wherein the second reporting information indicates that the terminal satisfies the deactivation trigger condition.

14. The method according to any one of claims 8 to 13, wherein the first configuration information further indicates one or more of the following: a handover trigger condition, a usage condition associated with the at least one cell sequence, an effective time of the first configuration information, or a measurement parameter needed to measure the candidate target cell, and the handover trigger condition is used to determine whether to perform a cell handover.

15. A cell handover method, applied to a network device, wherein the method comprises:
sending first configuration information, wherein the first configuration information is determined based on cell handover prediction capability information of a terminal, the first configuration information comprises a measurement object configuration, and the first configuration information is used by the terminal to predict a target cell to which the terminal is sequentially handed over in a first time period; and
receiving a prediction result, wherein the prediction result is determined based on the first configuration information, the prediction result indicates at least one first cell sequence, the first cell sequence comprises at least one first candidate target cell, and the at least one first candidate target cell is a target cell that is predicted by the terminal and to which the terminal is sequentially handed over in the first time period.

16. The method according to claim 15, wherein the method further comprises:
sending second configuration information, wherein the second configuration information indicates at least one second cell sequence, the second cell sequence comprises at least one second candidate target cell, the at least one second candidate target cell is a target cell to which the terminal is sequentially handed over in the first time period, and the second configuration information is determined based on the prediction result.

17. The method according to claim 15 or 16, wherein before the sending the first configuration information, the method further comprises:
receiving the cell handover prediction capability information.

18. The method according to any one of claims 15 to 17, wherein the cell handover prediction capability information comprises one or more of the following: a quantity of consecutive handovers capable of being predicted by the terminal, a cell parameter capable of being predicted by the terminal, validity duration capable of being predicted by the terminal, a quantity of cells needed for measurement by the terminal, a cell parameter needed for measurement by the terminal, duration needed for measurement by the terminal, or a reference signal configuration needed for measurement by the terminal.

19. The method according to any one of claims 15 to 18, wherein the receiving the prediction result comprises:
receiving auxiliary information, wherein the auxiliary information comprises the prediction result.

20. The method according to any one of claims 15 to 18, wherein before the receiving the prediction result, the method further comprises:
sending indication information, wherein the indication information is used to trigger the terminal to report the prediction result.

21. The method according to any one of claims 15 to 18, wherein the first configuration information comprises a reporting trigger condition, and the terminal reports the prediction result when the reporting trigger condition is satisfied.

22. The method according to any one of claims 15 to 21, wherein the prediction result further comprises one or more of the following: information about a cell in the first cell sequence, a probability of correctly predicting a cell in the first cell sequence, a handover time point for each hop in the first cell sequence, or predicted validity duration of the first cell sequence.

23. A cell handover method, wherein the method comprises:
receiving first configuration information, wherein the first configuration information is determined based on cell handover prediction capability information of a terminal, and the first configuration information comprises a measurement object configuration;
determining at least one first cell sequence based on the first configuration information, wherein the first cell sequence comprises at least one candidate target cell, and the at least one candidate target cell is a predicted target cell to which the terminal is sequentially handed over in a first time period; and
sending a prediction result, wherein the prediction result indicates the at least one first cell sequence.

24. The method according to claim 23, wherein before the receiving the first configuration information, the method further comprises:
sending the cell handover prediction capability information.

25. The method according to claim 23 or 24, wherein the cell handover prediction capability information comprises one or more of the following: a quantity of consecutive handovers capable of being predicted by the terminal, a cell parameter capable of being predicted by the terminal, validity duration capable of being predicted by the terminal, a quantity of cells needed for measurement by the terminal, a cell parameter needed for measurement by the terminal, duration needed for measurement by the terminal, or a reference signal configuration needed for measurement by the terminal.

26. The method according to any one of claims 23 to 25, wherein a manner of sending the prediction result comprises any one of the following:
sending in a manner of reporting auxiliary information, sending based on indication information of a network device, or sending after a reporting trigger condition configured by a network device is satisfied.

27. The method according to any one of claims 23 to 26, wherein the prediction result further comprises one or more of the following: information about a cell in the first cell sequence, a probability of correctly predicting a cell in the first cell sequence, a handover time point for each hop in the first cell sequence, or predicted validity duration of the first cell sequence.

28. A communication apparatus, comprising a unit configured to perform each step of the method according to any one of claims 1 to 7, comprising a unit configured to perform each step of the method according to any one of claims 8 to 14, comprising a unit configured to perform each step of the method according to any one of claims 15 to 22, or comprising a unit configured to perform each step of the method according to any one of claims 23 to 27.

29. A communication apparatus, comprising a processor, wherein the processor is coupled to a memory, the memory is configured to store a program or instructions, and when the program or instructions are executed by the processor, the apparatus is enabled to perform the method according to any one of claims 1 to 7, any one of claims 8 to 14, any one of claims 15 to 22, or any one of claims 23 to 27.

30. A communication apparatus, comprising a processor and an interface, wherein the interface is configured to send a signal and/or receive a signal, so that the processor performs the method according to any one of claims 1 to 7, any one of claims 8 to 14, any one of claims 15 to 22, or any one of claims 23 to 27.

31. A readable storage medium, wherein the readable storage medium stores a computer program or instructions, and when the computer program or instructions are executed, a computer is enabled to perform the method according to any one of claims 1 to 7, any one of claims 8 to 14, any one of claims 15 to 22, or any one of claims 23 to 27.

32. A computer program product, comprising computer program instructions, wherein the computer program instructions enable the computer to perform the method according to any one of claims 1 to 7, any one of claims 8 to 14, any one of claims 15 to 22, or any one of claims 23 to 27.
